# EUROPEAN PATENT APPLICATION

(11) **EP 4 520 308 A1**
(43) Date of publication of application: **12.03.2025**
(21) Application number: 23892019.3
(22) Date of filing: 15.11.2023
(51) Int. Cl.: A61H 1/02, B25J 9/00, B25J 13/08, A61H 3/00

(54) **WEARABLE DEVICE AND OPERATING METHOD THEREFOR**

(30) Priority: 16.11.2022 KR 20220153551; 28.12.2022 KR 20220187106
(71) Applicant: Samsung Electronics Co., Ltd., Suwon-si, Gyeonggi-do 16677 (KR)
(72) Inventor: KIM, Kyungrock, Suwon-si Gyeonggi-do 16677 (KR); SONG, Sukhoon, Suwon-si Gyeonggi-do 16677 (KR); SEO, Keehong, Suwon-si Gyeonggi-do 16677 (KR); HWANG, Jungsik, Suwon-si Gyeonggi-do 16677 (KR)
(74) Representative: Gulde & Partner
(86) International application number: PCT/KR2023/018394
(87) International publication number: WO 2024/106954

(57) **Abstract**

A wearable device may include a driving module configured to generate and output a torque, a communication module configured to perform communication with an electronic device, a sensor configured to generate angle data by measuring a joint angle of the user, and at least one processor configured to receive selection information including an exercise selected by the user from the electronic device through the communication module, generate angular velocity data based on the generated angle data, determine a parameter related to a pattern in which the torque is output based on the received selection information, determine control information for generating the torque based on the generated angle data, the generated angular velocity data, and the determined parameter, and control the driving module to generate the torque based on the determined control information.

## Description

### BACKGROUND

### 1. Field

An example embodiment relates to a wearable device and/or an operating method thereof.

### 2. Description of Related Art

In general, a walking assistance device may refer to a mechanism or device that may help a patient, who cannot walk on his own due to various diseases, accidents, and the like, to perform walking exercises for rehabilitation treatment, and/or to a mechanism or device that helps a person walk and/or exercise with respect to walking. With the recent intensifying aging societies, a growing number of people experience inconvenience in walking or have difficulty in normal walking due to malfunctioning joint issues, and there is increasing interest in walking assistance devices. A walking assistance device may be worn on a body of a user to assist the user with walking by providing a necessary muscular strength and to induce the user to walk in a normal walking pattern.

### SUMMARY

According to an example embodiment, a wearable device to be worn on a body of a user may include a driving module configured to generate and output a torque, a communication module configured to perform communication with an electronic device, a sensor configured to generate angle data by measuring a joint angle of the user, and at least one processor. The at least one processor may be configured to receive selection information including an exercise selected by the user from the electronic device through the communication module. The at least one processor may be configured to generate angular velocity data based on the generated angle data. The at least one processor may be configured to determine a parameter related to a pattern in which the torque is output based on the received selection information. The at least one processor may be configured to determine control information for generating the torque based on the generated angle data, the generated angular velocity data, and the determined parameter. The at least one processor may be configured to control the driving module to generate the torque based on the determined control information.

According to an example embodiment, an operating method of a wearable device to be worn on a body of a user may include receiving selection information including an exercise selected by the user from an electronic device, generating angle data by measuring a joint angle of the user, generating angular velocity data based on the generated angle data, determining a parameter related to a pattern in which a torque is output from the wearable device based on the received selection information, determining control information for generating the torque based on the generated angle data, the generated angular velocity data, and the determined parameter, and controlling a driving module of the wearable device to generate the torque based on the determined control information.

### BRIEF DESCRIPTION OF THE DRAWINGS

The above and other aspects, features, and advantages of certain embodiments of the present disclosure will be more apparent from the following detailed description, taken in conjunction with the accompanying drawings, in which:
FIG. 1 is a diagram illustrating an overview of a wearable device worn on a body of a user according to an example embodiment;
FIG. 2 is a diagram illustrating a management system including a wearable device and an electronic device according to an example embodiment;
FIG. 3 is a rear schematic view illustrating a wearable device according to an example embodiment;
FIG. 4 is a left side view illustrating a wearable device according to an example embodiment;
FIGS. 5A and 5B are diagrams illustrating a configuration of a control system of a wearable device according to an example embodiment;
FIG. 6 is a diagram illustrating an interaction between a wearable device and an electronic device according to an example embodiment;
FIG. 7 is a block diagram illustrating an example of a configuration of a wearable device according to an example embodiment;
FIGS. 8 and 9 are diagrams illustrating examples of exercises supported by a wearable device according to an example embodiment(s);
FIGS. 10 and 11 are diagrams illustrating an example of a spring model for providing a torque, of a wearable device according to an example embodiment(s);
FIGS. 12 and 13 are diagrams illustrating an example of an expanded spring model for providing a torque, of a wearable device according to an example embodiment(s);
FIGS. 14 to 25 are diagrams illustrating torque patterns in a first mode and a second mode of a wearable device according to an example embodiment(s);
FIGS. 26 and 27 are graphs of torques of a wearable device according to an example embodiment(s);
FIGS. 28 to 31, 32A-32C, 33 and 34 are diagrams illustrating torque patterns in a third mode and a fourth mode of a wearable device according to an example embodiment(s);
FIG. 35 is a flowchart illustrating an example of selecting a torque generation algorithm by a wearable device according to an example embodiment;
FIG. 36 is a diagram illustrating an example of a stabilization operation of a wearable device according to an example embodiment; and
FIG. 37 is a flowchart illustrating an operating method of a wearable device according to an example embodiment.

### DETAILED DESCRIPTION

The following detailed structural or functional description is provided as an example only and various alterations and modifications may be made to the embodiments. Here, the embodiments are not construed as limited to the disclosure and should be understood to include all changes, equivalents, and replacements within the idea and the technical scope of the disclosure.

Terms, such as first, second, and the like, may be used herein to describe components. Each of these terminologies is not used to define an essence, order or sequence of a corresponding component but used merely to distinguish the corresponding component from other component(s). For example, a first component may be referred to as a second component, and similarly, the second component may also be referred to as the first component.

It should be noted that if it is described that one component is "connected", "coupled", or "joined" to another component, at least a third component(s) may be "connected", "coupled", and "joined" between the first and second components, although the first component may be directly connected, coupled, or joined to the second component.

The singular forms "a", "an", and "the" are intended to include the plural forms as well, unless the context clearly indicates otherwise. It will be further understood that the terms "comprises/comprising" and/or "includes/including" when used herein, specify the presence of stated features, integers, steps, operations, elements, and/or components, but do not preclude the presence or addition of one or more other features, integers, steps, operations, elements, components and/or populations thereof.

Unless otherwise defined, all terms, including technical and scientific terms, used herein have the same meaning as commonly understood by those having ordinary skill in the art to which this disclosure pertains. Terms, such as those defined in commonly used dictionaries, are to be interpreted as having a meaning that is consistent with their meaning in the context of the relevant art, and are not to be interpreted in an idealized or overly formal sense unless expressly so defined herein.

Hereinafter, embodiments will be described in detail with reference to the accompanying drawings. When describing the embodiments with reference to the accompanying drawings, like reference numerals refer to like elements and a repeated description related thereto will be omitted.

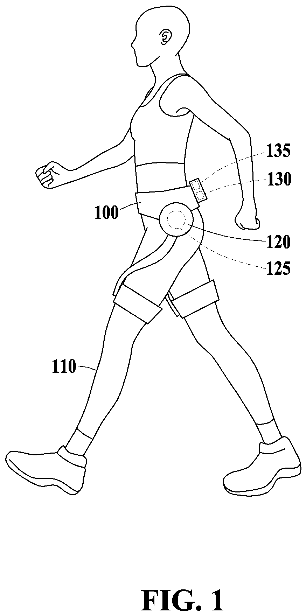

FIG. 1 is a diagram illustrating an overview of a wearable device worn on a body of a user according to an example embodiment.

Referring to FIG. 1, in an embodiment, a wearable device 100 may be a device worn on a body of a user 110 to assist the user 110 in walking, exercising, and/or working. In an embodiment, the wearable device 100 may be used to measure a physical ability (e.g., a walking ability, an exercise ability, or an exercise posture) of the user 110. In embodiments, the term "wearable device" may be replaced with "wearable robot", "robot trainer", "walking assistance device", or "exercise assistance device". The user 110 may be a human or an animal, but is not limited thereto. The wearable device 100 may be worn on a body (e.g., a lower body (the legs, ankles, knees, etc.), an upper body (the torso, arms, wrists, etc.), or the waist) of the user 110 to apply an external force such as an assistance force and/or a resistance force to a body motion of the user 110. The assistance force may be a force applied in the same direction as the body motion direction of the user 110, the force to assist a body motion of the user 110. The resistance force may be a force applied in a direction opposite to the body motion direction of the user 110, the force hindering a body motion of the user 110.

In an embodiment, the wearable device 100 may operate in a walking assistance mode for assisting the user 110 in walking. In the walking assistance mode, the wearable device 100 may assist the user 110 in walking by applying an assistance force generated by a driving module 120, comprising a motor and/or circuitry, of the wearable device 100 to the body of the user 110. The wearable device 100 may allow the user 110 to walk independently or to walk for a long time by providing a force required for walking of the user 110, to expand a walking ability of the user 110. The wearable device 100 may help in improving an abnormal walking habit or walking posture of a walker.

In an embodiment, the wearable device 100 may operate in an exercise assistance mode for enhancing the exercise effect of the user 110. In the exercise assistance mode, the wearable device 100 may hinder a body motion of the user 110 or provide resistance to a body motion of the user 110 by applying a resistance force generated by the driving module 120 to the body of the user 110. When the wearable device 100 is a hip-type wearable device that is worn on the waist (or pelvis) and legs (e.g., thighs) of the user 110, the wearable device 100 may provide an exercise load to a leg motion of the user 110 while being worn on the legs, thereby enhancing the exercise effect on the legs of the user 110. In an embodiment, the wearable device 100 may apply an assistance force to the body of the user 110 to assist the user 110 in exercising. For example, when a handicapped person or an elderly person wants to exercise wearing the wearable device 100, the wearable device 100 may provide an assistance force for assisting a body motion during the exercise process. In an embodiment, the wearable device 100 may provide an assistance force and a resistance force in combination for each exercise section or time section, in such a manner of providing an assistance force in some exercise sections and a resistance force in other exercise sections.

In an embodiment, the wearable device 100 may operate in a physical ability measurement mode for measuring a physical ability of the user 110. The wearable device 100 may measure motion information of a user using sensors (e.g., an angle sensor 125 and an inertial measurement unit (IMU) 135) provided in the wearable device 100 while the user is walking or exercising, and evaluate the physical ability of the user based on the measured motion information. For example, a gait index or an exercise ability indicator (e.g., the muscular strength, endurance, balance, or exercise posture) of the user 110 may be estimated through the motion information of the user 110 measured by the wearable device 100. The physical ability measurement mode may include an exercise posture measurement mode for measuring an exercise posture of a user.

In various embodiments of the present disclosure, for convenience of description, the wearable device 100 is described as an example of a hip-type wearable device, as illustrated in FIG. 1, but the embodiments are not limited thereto. As described above, the wearable device 100 may be worn on another body part (e.g., the upper arms, lower arms, hands, calves, and feet) other than the waist and legs (particularly, the thighs), and the shape and configuration of the wearable device 100 may vary depending on the body part on which the wearable device 100 is worn.

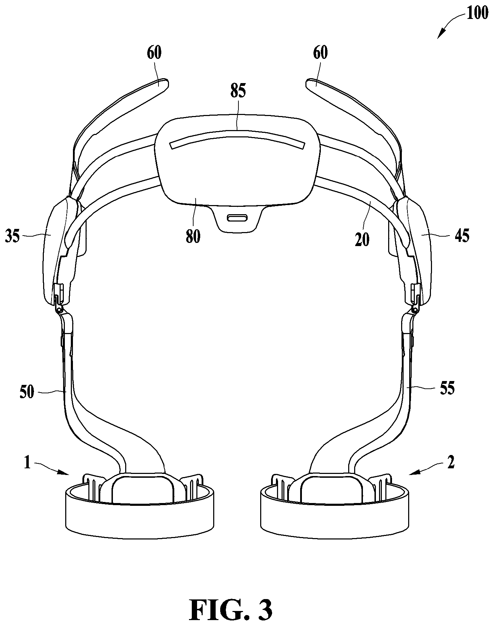

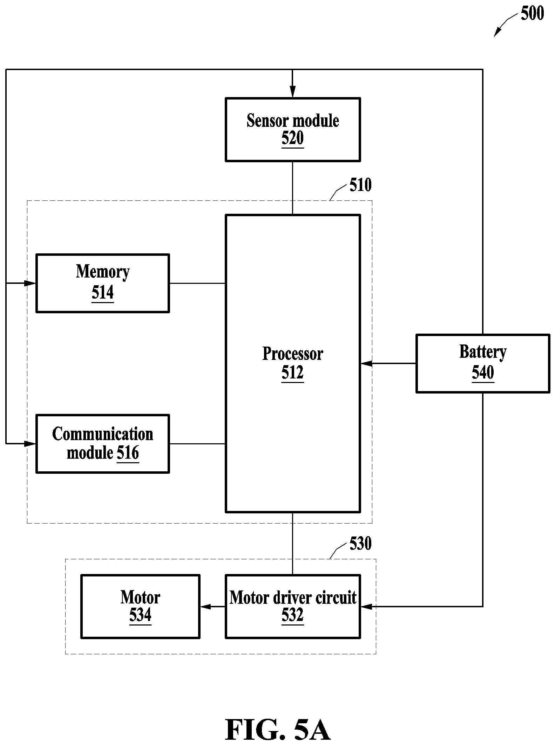

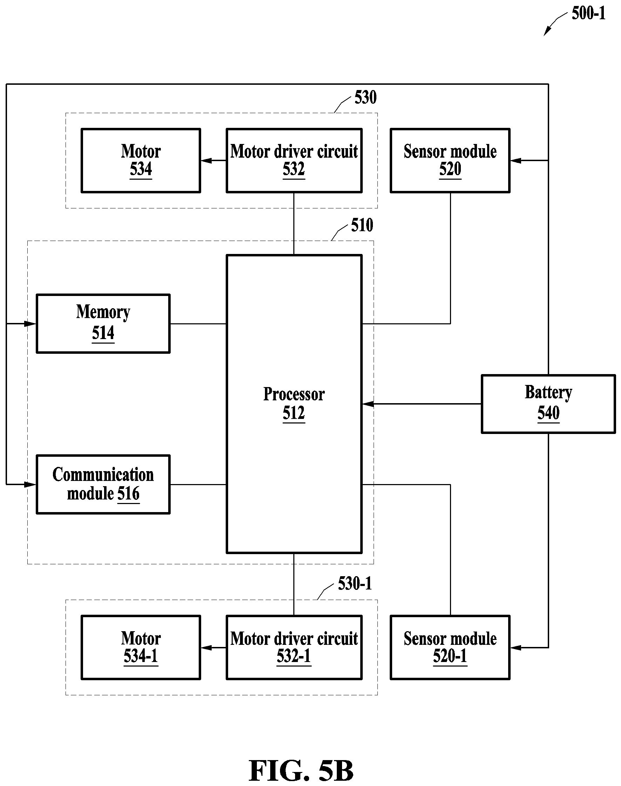

According to an embodiment, the wearable device 100 may include a support frame (e.g., leg support frames 50 and 55 and a waist support frame 20 of FIG. 3) configured to support the body of the user 110 when the wearable device 100 is worn on the body of the user 110, a sensor module (e.g., a sensor module 520 of FIG. 5A) configured to obtain sensor data including motion information about a body motion (e.g., a leg motion and an upper body motion) of the user 110, the driving module 120 (e.g., driving modules 35 and 45 of FIG. 3) configured to generate a torque to be applied to the legs of the user 110, and a control module 130 (e.g., a control module 510 of FIGS. 5A and 5B) configured to control the wearable device 100.

The wearable device 100 may include the angle sensor 125 configured to measure the joint angle of the user and the IMU 135 configured to measure a change in acceleration and rotation velocity according to a body motion of the user 110. The angle sensor 125 may measure the rotational angle (or angular velocity) of a leg support frame of the wearable device 100 corresponding to the hip joint angle value of the user 110. The rotational angle of the leg support frame measured by the angle sensor 125 may be estimated as the hip joint angle value (or leg angle value) of the user 110. The angle sensor 125 may include, for example, an encoder and/or a Hall sensor. In an embodiment, the angle sensor 125 may be present near each of the right hip joint and the left hip joint of the user 110. The IMU 135 may include an acceleration sensor and/or an angular velocity sensor (e.g., a gyro sensor), and may measure a change in acceleration and/or angular velocity (or rotation velocity) according to a motion of the user 110. The IMU 135 may measure, for example, an upper body motion value of the user 110 corresponding to a motion value of a waist support frame (or a base body (a base body 80 of FIG. 3)) of the wearable device 100. The motion value of the waist support frame measured by the IMU 135 may be estimated as the upper body motion value of the user 110. Herein, the "IMU" may also be referred to as the "inertial sensor".

In an embodiment, the control module 130 and the IMU 135 may be arranged within the base body (e.g., the base body 80 of FIG. 3) of the wearable device 100. The base body may be positioned on the lumbar region (an area of the lower back) of the user 110 while the user 110 is wearing the wearable device 100. The base body may be formed or attached to the outer side of the waist support frame of the wearable device 100. The base body may be mounted on the lumbar region of the user 110 to provide a cushioning feeling to the lower back of the user 110 and may support the lower back of the user 110 together with the waist support frame.

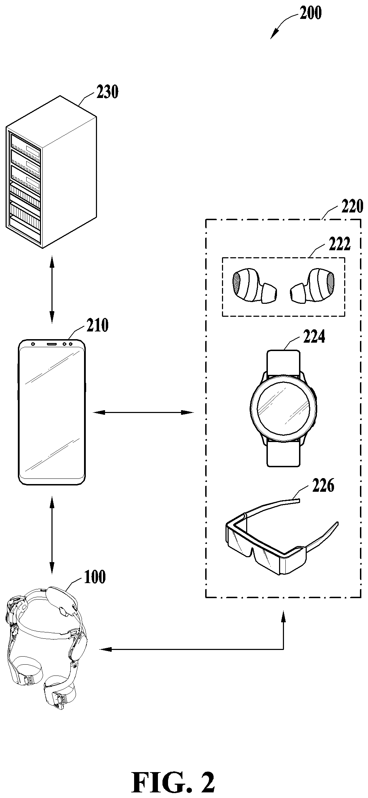

FIG. 2 is a diagram illustrating a management system including a wearable device and an electronic device according to an example embodiment.

Referring to FIG. 2, an exercise management system 200 may include the wearable device 100 to be worn on a body of a user, an electronic device 210, another wearable device 220, and a server 230. In an embodiment, at least one (e.g., the other wearable device 220 or the server 230) of these devices may be omitted from the exercise management system 200, or one or more other devices (e.g., an exclusive controller device of the wearable device 100) may be added to the exercise management system 200.

In an embodiment, the wearable device 100 may be worn on a body of the user in the walking assistance mode to assist a motion of the user. For example, the wearable device 100 may be worn on the legs of the user to help the user in walking by generating an assistance force for assisting a leg motion of the user.

In an embodiment, the wearable device 100 may generate a resistance force for hindering a body motion of the user or an assistance force for assisting a body motion of the user and apply the generated resistance force or assistance force to the body of the user to enhance the exercise effect of the user in an exercise assistance mode. In the exercise assistance mode, the user may select, through the electronic device 210, an exercise program (e.g., squat, kickback, split lunge, dumbbell squat, lunge and knee up, stretching, or the like) to perform using the wearable device 100 and/or an exercise intensity to be applied to the wearable device 100. The wearable device 100 may control a driving module of the wearable device 100 according to the exercise program selected by the user and obtain sensor data including motion information of the user through a sensor module. The wearable device 100 may adjust the strength of the resistance force or assistance force applied to the user according to the exercise intensity selected by the user. For example, the wearable device 100 may control the driving module to generate a resistance force corresponding to the exercise intensity selected by the user.

**In** an embodiment, the wearable device 100 may be used to measure a physical ability of the user in interoperation with the electronic device 210. The wearable device 100 may operate in a physical ability measurement mode, which is a mode for measuring the physical ability of the user, under a control of the electronic device 210, and may transmit sensor data obtained by a motion of the user in the physical ability measurement mode to electronic device 210. The electronic device 210 may estimate the physical ability of the user by analyzing the sensor data received from the wearable device 100.

The electronic device 210 may communicate with the wearable device 100 and may remotely control the wearable device 100 or provide the user with state information about a state (e.g., a booting state, a charging state, a sensing state, or an error state) of the wearable device 100. The electronic device 210 may receive the sensor data obtained by a sensor in the wearable device 100 from the wearable device 100 and estimate the physical ability of the user or an exercise result based on the received sensor data. In an embodiment, when the user exercises wearing the wearable device 100, the wearable device 100 may obtain sensor data including motion information of the user using sensors and transmit the obtained sensor data to the electronic device 210. The electronic device 210 may extract a motion value of the user from the sensor data and evaluate an exercise posture of the user based on the extracted motion value. The electronic device 210 may provide the user with an exercise posture measured value and exercise posture evaluation information related to the exercise posture of the user through a graphical user interface (GUI).

In an embodiment, the electronic device 210 may execute a program (e.g., an application) configured to control the wearable device 100, and the user may adjust an operation or a set value of the wearable device 100 (e.g., the magnitude of torque output from a driving module (e.g., the driving modules 35 and 45 of FIG. 3), the volume of audio output from a sound output module (e.g., a speaker), or the brightness of a lighting unit (e.g., a lighting unit 85 of FIG. 3) through the corresponding program. The program executed by the electronic device 210 may provide a GUI for interaction with the user. The electronic device 210 may include various types of devices. For example, the electronic device 210 may include a portable communication device (e.g., a smart phone), a computer device, an access point, a portable multimedia device, or a home appliance (e.g., a television, an audio device, or a projector device), but is not limited thereto.

According to an embodiment, the electronic device 210 may be connected to the server 230 using short-range wireless communication or cellular communication. The server 230 may receive user profile information of the user who uses the wearable device 100 from the electronic device 210 and store and manage the received user profile information. The user profile information may include, for example, information about at least one of the name, age, gender, height, weight, or body mass index (BMI). The server 230 may receive exercise history information about an exercise performed by the user from the electronic device 210 and store and manage the received exercise history information. The server 230 may provide the electronic device 210 with various exercise programs or physical ability measurement programs that may be provided to the user.

According to an embodiment, the wearable device 100 and/or the electronic device 210 may be connected to the other wearable device 220. The other wearable device 220 may include, for example, wireless earphones 222, a smart watch 224, or smart glasses 226, but is not limited thereto. In an embodiment, the smart watch 224 may measure a biosignal including heart rate information of the user and transmit the measured biosignal to the electronic device 210 and/or the wearable device 100. The electronic device 210 may estimate the heart rate information (e.g., the current heart rate, maximum heart rate, and average heart rate) of the user based on the biosignal received from the smart watch 224 and provide the estimated heart rate information to the user.

In an embodiment, the exercise result information, physical ability information (e.g., walking evaluation information), and/or exercise posture evaluation information of the user evaluated by the electronic device 210 may be transmitted to the other wearable device 220 and provided to the user through the other wearable device 220. State information of the wearable device 100 may also be transmitted to the other wearable device 220 and provided to the user through the other wearable device 220. In an embodiment, the wearable device 100, the electronic device 210, and the other wearable device 220 may be connected to each other through wireless communication (e.g., Bluetooth communication or Wi-Fi communication).

In an embodiment, the wearable device 100 may provide (or output) feedback (e.g., visual feedback, auditory feedback, or haptic feedback) corresponding to the state of the wearable device 100 according to the control signal received from the electronic device 210. For example, the wearable device 100 may provide visual feedback through the lighting unit (e.g., the lighting unit 85 of FIG. 3) and provide auditory feedback through the sound output module (e.g., the speaker). The wearable device 100 may include a haptic module and provide haptic feedback in the form of vibration to the body of the user through the haptic module. The electronic device 210 may also provide (or output) feedback (e.g., visual feedback, auditory feedback, or haptic feedback) corresponding to the state of the wearable device 100.

In an embodiment, the electronic device 210 may present a personalized exercise goal to the user in the exercise assistance mode. The personalized exercise goal may include respective target amounts of exercise for exercise types (e.g., strength exercise, balance exercise, and aerobic exercise) desired by the user, determined by the electronic device 210 and/or the server 230. When the server 230 determines a target amount of exercise, the server 230 may transmit information about the determined target amount of exercise to the electronic device 210. The electronic device 210 may personalize and present the target amounts of exercise for the exercise types, such as strength exercise, aerobic exercise, and balance exercise, according to a desired exercise program (e.g., squat, split lunge, or a lunge and knee up) and/or the physical characteristics (e.g., the age, height, weight, and BMI) of the user. The electronic device 210 may display a GUI screen displaying the target amounts of exercise for the respective exercise types on a display.

In an embodiment, the electronic device 210 and/or the server 230 may include a database in which information about a plurality of exercise programs to be provided to the user through the wearable device 100 is stored. To achieve an exercise goal of the user, the electronic device 210 and/or the server 230 may recommend an exercise program suitable for the user. The exercise goal may include, for example, at least one of muscle strength improvement, physical strength improvement, cardiovascular endurance improvement, core stability improvement, flexibility improvement, or symmetry improvement. The electronic device 210 and/or the server 230 may store and manage the exercise program performed by the user, the results of performing the exercise program, and the like.

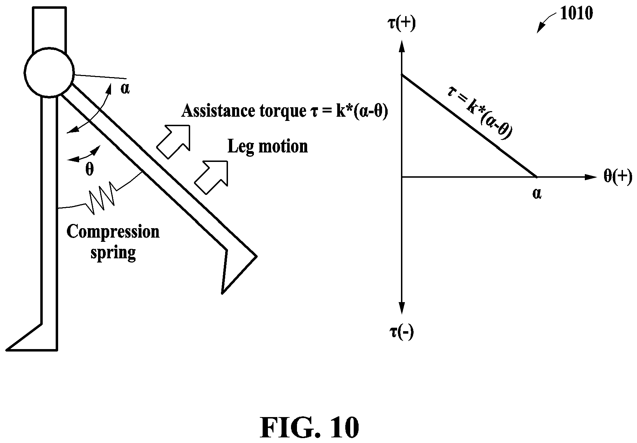

According to an embodiment, the electronic device 210 may evaluate a walking ability of the user in interoperation with the wearable device 100. For example, the electronic device 210 may estimate a gait index, which is an indicator of a walking state of the user, based on sensor data obtained from a sensor module of the wearable device 100 worn by the user. The gait index may be a criterion for determining the quality of walking performed by the user. The gait index estimated by the electronic device 210 may include, for example, at least one of a walking speed, a step time, a step length, a stride length, a walking distance, a gait symmetry index, a gait variability index, or a walk ratio. The electronic device 210 may calculate the gait index in real time while the user walks wearing the wearable device 100. The step length and the stride length will be described in detail with reference to FIG. 10.

When the user walks (or exercises) wearing the wearable device 100, the wearable device 100 may obtain sensor data including motion information related to walking of the user using sensors and transmit the obtained sensor data to the electronic device 210. The electronic device 210 may estimate walking evaluation information of the user based on the sensor data and provide the user with the estimated walking evaluation information. The walking evaluation information may include, for example, various gait indices (e.g., the walking speed, the step time, the step or stride length, the gait symmetry index, the gait variability index, and the walk ratio) related to walking of the user when the user walks wearing the wearable device 100. The electronic device 210 may provide the user with feedback information to improve the walking state of the user based on the walking evaluation information. For example, when it is determined the measured step or stride length of the user is less than a desirable step or stride length, the electronic device 210 may propose that the user walk with a wider step or stride length.

The wearable device 100 and the electronic device 210 may estimate the gait index such as the walking speed using an angle sensor (e.g., the angle sensor 125 of Fig. 1) and an IMU (e.g., the IMU 135 of Fig. 1) of the wearable device 100, without using a global positioning system (GPS) sensor for tracking the position of the user, and thus, may estimate the gait index not only outdoors but also indoors. In addition, the wearable device 100 and the electronic device 210 may estimate the gait index even when the user walks at a fixed position, such as on a treadmill, and may estimate the gait index reflecting the individual characteristics of the user. The electronic device 210 may provide the user using the wearable device 100 with evaluation information about the walking state of the user, thereby increasing the user's interest in walking or exercising.

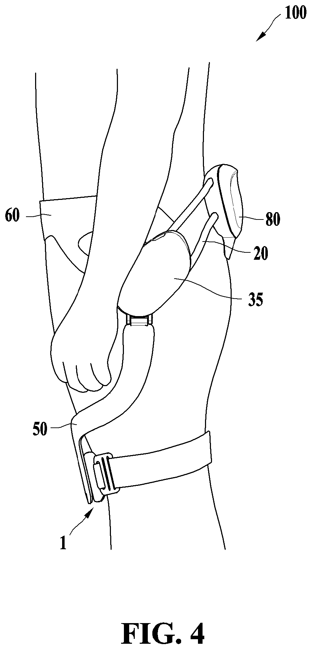

FIG. 3 is a rear schematic view illustrating a wearable device according to an example embodiment. FIG. 4 is a left side view illustrating the wearable device according to an example embodiment.

Referring to FIGS. 3 and 4, the wearable device 100 according to an embodiment may include the base body 80, the waist support frame 20, the driving modules 35 and 45, the leg support frames 50 and 55, thigh fastening portions 1 and 2, and a waist fastening portion 60. The base body 80 may include the lighting unit 85. In an embodiment, at least one (e.g., the lighting unit 85) of these components may be omitted from the wearable device 100, or one or more other components (e.g., a haptic module) may be added to the wearable device 100.

The base body 80 may be positioned on the lumbar region of a user while the user is wearing the wearable device 100. The base body 80 may be mounted on the lumbar region of the user to provide a cushioning feeling to the lower back of the user and may support the lower back of the user. The base body 80 may be hung on the hip region (an area of the hips) to prevent or reduce a chance of the wearable device 100 from being separated downward due to gravity while the user is wearing the wearable device 100. The base body 80 may distribute a portion of the weight of the wearable device 100 to the lower back of the user while the user is wearing the wearable device 100. The base body 80 may be connected, directly or indirectly, to the waist support frame 20. Waist support frame connecting elements (not shown) to be connected, directly or indirectly, to the waist support frame 20 may be provided at both end portions of the base body 80.

In an embodiment, the lighting unit 85 may be arranged on the outer side of the base body 80. The lighting unit 85 may include a light source (e.g., a light-emitting diode (LED)). The lighting unit 85 may emit light under the control of a control module (not shown) (e.g., the control module 510 of FIGS. 5A and 5B). **In** some embodiments, the control module may control the lighting unit 85 to provide (or output) visual feedback corresponding to the state of the wearable device 100 to the user through the lighting unit 85.

The waist support frame 20 may extend from both end portions of the base body 80. The lumbar region of the user may be accommodated inside the waist support frame 20. The waist support frame 20 may include at least one rigid body beam. Each beam may be in a curved shape having a preset curvature to enclose the lumbar region of the user. The waist fastening portion 60 may be connected, directly or indirectly, to an end portion of the waist support frame 20. The driving modules 35 and 45 may be connected, directly or indirectly, to the waist support frame 20.

In an embodiment, the control module, an IMU (not shown) (e.g., the IMU 135 of FIG. 1), a communication module (not shown) (e.g., a communication module 516 of FIG. 5A and 5B), and a battery (not shown) may be arranged inside the base body 80. The base body 80 may protect the control module, the IMU, the communication module, and the battery. The control module may generate a control signal for controlling the operation of the wearable device 100. The control module may include a control circuit including a processor configured to control actuators of the driving modules 35 and 45 and a memory. The control module may further include a power supply module (not shown) configured to supply power from the battery to each of the components of the wearable device 100.

**In** an embodiment, the wearable device 100 may include a sensor module (not shown) (e.g., the sensor module 520 of FIG. 5A) configured to obtain sensor data from at least one sensor. The sensor module may obtain sensor data that changes according to a motion of the user. In an embodiment, the sensor module may obtain sensor data including motion information of the user and/or motion information of the components of the wearable device 100. The sensor module may include, for example, an IMU (e.g., the IMU 135 of FIG. 1) configured to measure an upper body motion value of the user or a motion value of the waist support frame 20 and an angle sensor (e.g., the angle sensor 125 of FIG. 1) configured to measure a hip joint angle value of the user or a motion value of the leg support frames 50 and 55, but is not limited thereto. For example, the sensor module may further include at least one of a position sensor, a temperature sensor, a biosignal sensor, or a proximity sensor.

The waist fastening portion 60 may be connected, directly or indirectly, to the waist support frame 20 to fasten the waist support frame 20 to the waist of the user. The waist fastening portion 60 may include, for example, a pair of belts.

The driving modules 35 and 45 may generate an external force (or torque) to be applied to the body of the user based on the control signal generated by the control module. For example, the driving modules 35 and 45 may generate an assistance force or resistance force to be applied to the legs of the user. In an embodiment, the driving modules 35 and 45 may include a first driving module 45 disposed in a position corresponding to a position of a right hip joint of the user, and a second driving module 35 disposed in a position corresponding to a position of a left hip joint of the user. The first driving module 45 may include a first actuator and a first joint member, and the second driving module 35 may include a second actuator and a second joint member. The first actuator may provide power to be transmitted to the first joint member, and the second actuator may provide power to be transmitted to the second joint member. The first actuator and the second actuator may each include a motor configured to generate power (or a torque) by receiving electric power from the battery. When the motor is supplied with electric power and driven, the motor may generate a force (an assistance force) for assisting a body motion of the user or a force (a resistance force) for hindering a body motion of the user. In an embodiment, the control module may adjust the strength and direction of the force generated by the motor by adjusting the voltage and/or current supplied to the motor.

In an embodiment, the first joint member and the second joint member may receive power from the first actuator and the second actuator, respectively, and may apply an external force to the body of the user based on the received power. The first joint member and the second joint member may be arranged at positions corresponding to the joints of the user, respectively. One side of the first joint member may be connected, directly or indirectly, to the first actuator, and the other side of the first joint member may be connected, directly or indirectly, to a first leg support frame 55. The first joint member may be rotated by the power received from the first actuator. An encoder or a Hall sensor that may operate as an angle sensor configured to measure the rotational angle of the first joint member (corresponding to the joint angle of the user) may be arranged on one side of the first joint member. One side of the second joint member may be connected, directly or indirectly, to the second actuator, and the other side of the second joint member may be connected, directly or indirectly, to a second leg support frame 50. The second joint member may be rotated by the power received from the second actuator. An encoder or a Hall sensor that may operate as an angle sensor configured to measure the rotational angle of the second joint member may be arranged on one side of the second joint member.

In an embodiment, the first actuator may be arranged in a lateral direction of the first joint member, and the second actuator may be arranged in a lateral direction of the second joint member. A rotation axis of the first actuator and a rotation axis of the first joint member may be spaced apart from each other, and a rotation axis of the second actuator and a rotation axis of the second joint member may also be spaced apart from each other. However, embodiments are not limited thereto, and an actuator and a joint member may share a rotation axis. In an embodiment, each actuator may be spaced apart from a corresponding joint member. In this case, each of the driving modules 35 and 45 may further include a power transmission module (not shown) configured to transmit power from the actuator to the joint member. The power transmission module may be a rotary body, such as a gear, or a longitudinal member, such as a wire, a cable, a string, a spring, a belt, or a chain. However, the scope of the embodiment is not limited by the positional relationship between an actuator and a joint member and the power transmission structure described above.

In an embodiment, the leg support frame 50, 55 may support a leg (e.g., a thigh) of the user when the wearable device 100 is worn on the leg of the user. For example, the leg support frames 50 and 55 may transmit power (a torque) generated by the driving modules 35 and 45 to the thighs of the user, and the power may act as an external force to be applied to a motion of the legs of the user. As one end portions of the leg support frames 50 and 55 are connected, directly or indirectly, to the joint members to rotate and the other end portions of the leg support frames 50 and 55 are connected, directly or indirectly, to the thigh fastening portions 1 and 2, the leg support frames 50 and 55 may transmit the power generated by the driving modules 35 and 45 to the thighs of the user while supporting the thighs of the user. For example, the leg support frames 50 and 55 may push or pull the thighs of the user. The leg support frames 50 and 55 may extend in the longitudinal direction of the thighs of the user. The leg support frames 50 and 55 may be bent to surround at least a portion of the circumference of the thighs of the user. The leg support frames 50 and 55 may include the first leg support frame 55 configured to support the right leg of the user and the second leg support frame 50 configured to support the left leg of the user.

The thigh fastening portions 1 and 2 may be connected, directly or indirectly, to the leg support frames 50 and 55 and may fix the leg support frames 50 and 55 to the thigh. The thigh fastening portions 1 and 2 may include a first thigh fastening portion 2 configured to fasten the first leg support frame 55 to the right thigh of the user and a second thigh fastening portion 1 configured to fasten the second leg support frame 50 to the left thigh of the user.

In an embodiment, the first thigh fastening portion 2 may include a first cover, a first fastening frame, and a first strap, and the second thigh fastening portion 1 may include a second cover, a second fastening frame, and a second strap. In an embodiment, the first cover and the second cover may apply torques generated by the driving modules 35 and 45 to the thighs of the user. For example, the first cover and the second cover may be arranged on one sides of the thighs of the user to push or pull the thigh of the user. The first cover and the second cover may be arranged on the front surfaces of the thighs of the user. The first cover and the second cover may be arranged in the circumferential directions of the thighs of the user. The first cover and the second cover may extend to both sides from the other end portions of the leg support frames 50 and 55 and may include curved surfaces corresponding to the thighs of the user. One ends of the first cover and the second cover may be connected, directly or indirectly, to the fastening frames, and the other ends thereof may be connected, directly or indirectly, to the straps.

The first fastening frame and the second fastening frame may be arranged, for example, to surround at least some portions of the circumferences of the thighs of the user, thereby preventing or reducing chances of the thighs of the user from being separated from the leg support frames 50 and 55. The first fastening frame may have a fastening structure that connects the first cover and the first strap, and the second fastening frame may have a fastening structure that connects the second cover and the second strap.

The first strap may enclose the remaining portion of the circumference of the right thigh of the user that is not covered by the first cover and the first fastening frame, and the second strap may enclose the remaining portion of the circumference of the left thigh of the user that is not covered by the second cover and the second fastening frame. The first strap and the second strap may include, for example, an elastic material (e.g., a band).

FIGS. 5A and 5B are diagrams illustrating a configuration of a control system of a wearable device according to an example embodiment.

Referring to FIG. 5A, a wearable device (e.g., the wearable device 100 of FIGS. 1 and 3) may be controlled by a control system 500. Referring to FIG. 5B, a wearable device (e.g., the wearable device 100 of FIGS. 1 and 3) may be controlled by a control system 500-1. The control system 500 of FIG. 5A may include the control module 510, the sensor module 520, a driving module 530, and a battery 540. The control system 500-1 of FIG. 5B may include the control module 510, sensor modules 520 and 520-1, driving modules 530 and 530-1, and a battery 540. The driving module 530 may include a motor 534 to generate power (e.g., torque), and a motor driver circuit 532 to drive the motor 534. In the example of FIG. 5A, a sensor module 520, and the driving module 530 including one motor driver circuit 532 and one motor 534 are illustrated, however, this is merely an example. Referring to FIG. 5B, as in the shown embodiment, a plurality of (e.g., two or more) sensor modules 520 and 520-1, motor driver circuits 532 and 532-1, and motors 534 and 534-1 may be provided. The driving module 530 including the motor driver circuit 532 and the motor 534 may correspond to the first driving module 45 of FIG. 3, and a driving module 530-1 including the motor driver circuit 532-1 and the motor 534-1 may correspond to the second driving module 35 of FIG. 3. The following description of each of the sensor module 520, the motor driver circuit 532, and the motor 534 may also be applied to the sensor module 520-1, the motor driver circuit 532-1, and the motor 534-1 shown in FIG. 5B.

Referring to FIG. 5A, the sensor module 520 may include at least one sensor. The sensor module 520 may include sensor data including motion information of a user. For example, the sensor module 520 may obtain sensor data that changes according to a leg motion of the user. The sensor module 520 may transmit the obtained sensor data to the control module 510. The sensor module 520 may include, for example, an IMU, an angle sensor (e.g., an encoder), a position sensor, a proximity sensor, a biosignal sensor, and a temperature sensor. The IMU may measure acceleration information and posture information while the user walks. For example, the IMU may sense X-axis, Y-axis, and Z-axis accelerations and X-axis, Y-axis, and Z-axis angular velocities according to a walking motion of the user. The angle sensor may measure angle information about a hip joint angle of the user. The angle information measured by the angle sensor may include, for example, a hip joint angle of a right leg, a hip joint angle of a left leg, and information on a motion direction of a leg.

The battery 540 may supply power to each component of the wearable device. The wearable device may convert the power of the battery 540 into power suitable for an operating voltage of each component of the wearable device and supply the converted power to each component.

The driving module 530 may generate an external force to be applied to a leg of the user under the control of the control module 510. The driving module 530 may be disposed in a position corresponding to a position of a hip joint of the user and may generate torque to be applied to a leg of the user based on a control signal generated by the control module 510. The control module 510 may transmit the control signal to the motor driver circuit 532, and the motor driver circuit 532 may generate a current signal corresponding to the control signal and supply the current signal to the motor 534, to control an operation of the motor 534. The current signal may not be supplied to the motor 534 according to the control signal. When the motor 534 is driven as the current signal is supplied to the motor 534, the motor 534 may generate a torque to assist with a leg motion of the user (hereinafter, referred to as an "assistance torque") or a torque to hinder a leg motion (hereinafter, referred to as a "resistance torque").

The control module 510 may control an overall operation of the wearable device and may generate a control signal to control each component (e.g., the driving module 530). The control module 510 may include at least one processor 512, a memory 514, and a communication module 516.

The at least one processor 512 may execute, for example, software to control at least one other component (e.g., a hardware or software component) of the wearable device connected, directly or indirectly, to the at least one processor 512, and may perform a variety of data processing or computation. According to an embodiment, as at least a part of data processing or computation, the at least one processor 512 may store instructions or data received from another component (e.g., the communication module 516) in the memory 514, may process the instructions or the data stored in the memory 514, and may store result data in the memory 514. According to an embodiment, the at least one processor 512 may include one or more, or any combination of a main processor (e.g., a central processing unit (CPU) or an application processor (AP)) or an auxiliary processor (e.g., a graphics processing unit (GPU), a neural processing unit (NPU), an image signal processor (ISP), a sensor hub processor, or a communication processor (CP)) that is operable independently of, or in conjunction with the main processor. The auxiliary processor may be implemented separately from the main processor or as a part of the main processor.

The memory 514 may store a variety of data used by at least one component (e.g., the processor 512) of the control module 510. The data may include, for example, software, sensor data, and input data or output data for instructions related thereto. The memory 514 may include a volatile memory or a non-volatile memory (e.g., a random-access memory (RAM), a dynamic RAM (DRAM), or a static RAM (SRAM)).

The communication module 516, comprising communication circuitry, may support establishing a direct (e.g., wired) communication channel or a wireless communication channel between the control module 510 and another component of the wearable device or an external electronic device (e.g., the electronic device 210 or the other wearable device 220 of FIG. 2), and performing communication via the established communication channel. For example, the communication module 516 may transmit the sensor data and/or the walking evaluation information of the user to an external electronic device. According to an embodiment, the communication module 516 may include one or more CPs that are operable independently of the processor 512 and that support a direct (e.g., wired) communication or a wireless communication. According to an embodiment, the communication module 516 may include a wireless communication module (e.g., a cellular communication module, a short-range wireless communication module, or a global navigation satellite system (GNSS) communication module), and/or a wired communication module. A corresponding one of these communication modules may communicate with another component of the wearable device and/or an external electronic device via a short-range communication network, such as Bluetooth^{™} wireless-fidelity (Wi-Fi), Adaptive Network Topology (ANT) or infrared data association (IrDA), or a long-range communication network, such as a legacy cellular network, a 5G network, a next-generation communication network, the Internet, or a computer network (e.g., a local area network (LAN) or a wide region network (WAN).

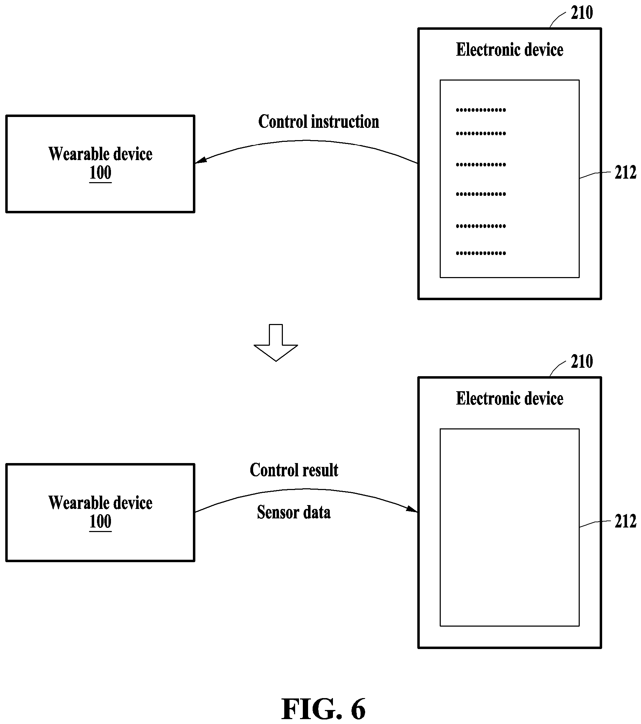

FIG. 6 is a diagram illustrating an interaction between a wearable device and an electronic device according to an example embodiment.

Referring to FIG. 6, the wearable device 100 may communicate with the electronic device 210. For example, the electronic device 210 may be a user terminal of a user using the wearable device 100 or a controller device dedicated to the wearable device 100. In an embodiment, the wearable device 100 and the electronic device 210 may be connected to each other through short-range wireless communication (e.g., Bluetooth^{™} or Wi-Fi communication).

In an embodiment, the electronic device 210 may check a state of the wearable device 100 or execute an application to control or operate the wearable device 100. A screen of a user interface (UI) may be displayed to control an operation of the wearable device 100 or determine an operation mode of the wearable device 100 on a display 212 of the electronic device 210 through the execution of the application. The UI may be, for example, a GUI.

In an embodiment, the user may input an instruction for controlling the operation of the wearable device 100 (e.g., an execution instruction to a walking assistance mode, an exercise assistance mode, or a physical ability measurement mode) or change settings of the wearable device 100 through a GUI screen on the display 212 of the electronic device 210. The electronic device 210 may generate a control instruction (or control signal) corresponding to an operation control instruction or a setting change instruction input by the user and transmit the generated control instruction to the wearable device 100. The wearable device 100 may operate according to the received control instruction and transmit a control result according to the control instruction and/or sensor data measured by the sensor module of the wearable device 100 to the electronic device 210. The electronic device 210 may provide the user with result information (e.g., walking ability information, exercise ability information, or exercise posture evaluation information) derived by analyzing the control result and/or the sensor data through the GUI screen.

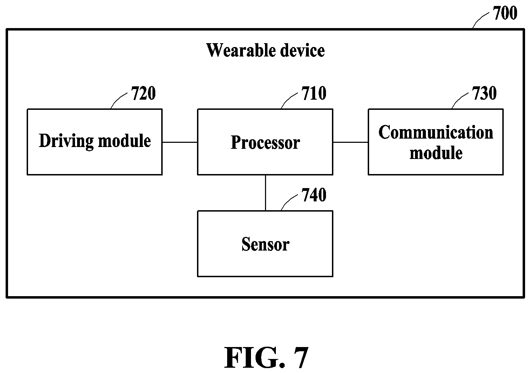

FIG. 7 is a block diagram illustrating an example of a configuration of a wearable device according to an example embodiment.

Referring to FIG. 7, a wearable device 700 (e.g., the wearable device 100) according to an embodiment may include a processor 710 (e.g., the processor 512), a driving module 720 (e.g., the driving module 530), a communication module 730 (e.g., the communication module 516), and a sensor 740.

The wearable device 700 of FIG. 7 may further include a driving module corresponding to the driving module 530-1.

In an embodiment, the communication module 730 may perform communication with an electronic device (e.g., the electronic device 210 or the other wearable device 220). The communication module 730 may receive selection information including an exercise selected by a user from the electronic device 210.

**In** an embodiment, the sensor 740 may generate angle data by measuring a joint angle of the user. The sensor 740 may include, for example, the angle sensor 125 and/or the IMU 135.

**In** an embodiment, the processor 710 may receive the generated angle data from the sensor 740 and generate angular velocity data based on the generated angle data.

**In** an embodiment, the processor 710 may receive the selection information including the exercise selected by the user from the communication module 730, and determine a parameter related to a pattern (or a torque pattern) in which a torque is output from the wearable device 700 based on the received selection information. As described later, the parameter may include at least one of an angle value *α* or a hysteresis value *µ*. The angle value *α* and the hysteresis value *µ* will be described later. The processor 710 may select a parameter mapped to the exercise selected by the user.

**In** an embodiment, the processor 710 may determine control information for generating a torque (e.g., an assistance torque or a resistance torque) based on the generated angle data, the generated angular velocity data, and the determined parameter. The selection information may include an exercise intensity (or an exercise strength) set by the user. The processor 710 may determine a gain k related to the magnitude of the torque based on the exercise intensity in the selection information. The processor 710 may determine the control information for generating the torque based on the determined gain, the generated angle data, the generated angular velocity data, and the determined parameter.

In an embodiment, the processor 710 may control the driving module 720 based on the determined control information. The driving module 720 may generate and output a torque under the control of the processor 710. Through the torque, the user may be provided with an assistance force or a resistance force from the wearable device 700.

In an embodiment, the selected exercise may include a motion 1 in which the joint angle increases and a motion 2 in which the joint angle decreases. The processor 710 may control the wearable device 700 to operate in one of a plurality of modes according to the selection information.

In an embodiment, the plurality of modes may include first to fourth modes. The first mode may be a mode in which the wearable device 700 outputs torques in the same direction in the motion 1 and the motion 2 and outputs an assistance torque that assists with a designated motion (e.g., a main motion) among the motion 1 and the motion 2. The second mode may be a mode in which the wearable device 700 outputs torques in the same direction in the motion 1 and the motion 2 and outputs a resistance torque that provides resistance to a designated motion (e.g., a main motion) among the motion 1 and the motion 2. The third mode may be a mode in which the wearable device 700 outputs torques in different directions in the motion 1 and the motion 2 and outputs an assistance torque that assists with the motion 1 and the motion 2. The fourth mode may be a mode in which the wearable device 700 outputs torques in different directions in the motion 1 and the motion 2 and outputs a resistance torque that provides resistance to the motion 1 and the motion 2.

As described in detail later, the wearable device 700 according to an embodiment may output a torque (e.g., an assistance torque or a resistance torque) according to a torque pattern corresponding to an exercise selected by the user, thereby providing the user with an appropriate force (e.g., assistance force or resistance force) at more accurate timing.

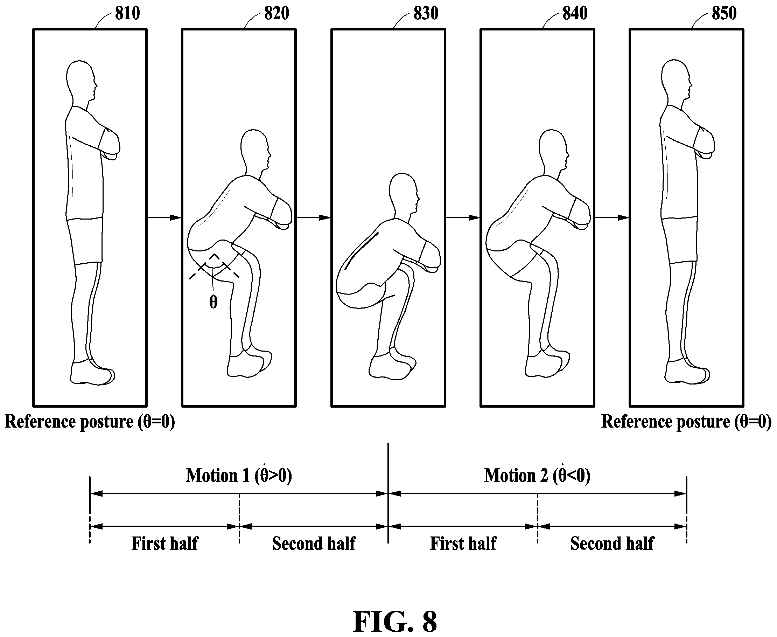

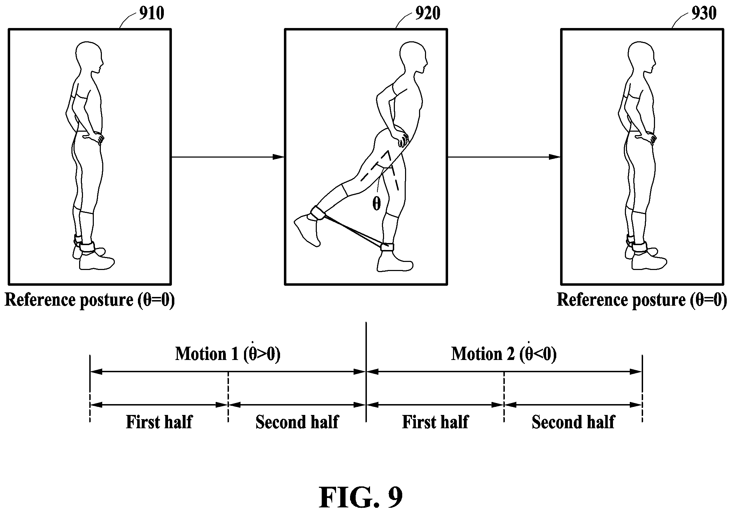

FIGS. 8 and 9 are diagrams illustrating examples of exercises supported by a wearable device according to an example embodiment(s).

An exercise may be a user's repetition of a motion of rotating a joint to a possible angle from a reference posture and then returning to the reference posture.

The exercise may include a motion 1 representing a section in which the joint angle *θ* increases from the reference posture and a motion 2 representing a section in which the joint angle decreases from the posture of the user rotating the joint to the maximum or a high value. The reference posture may be a posture with a joint angle *θ* of 0 degrees. The motion 1 may correspond to a section from the reference posture to the posture in which the user rotates the joint to the maximum. The motion 2 may correspond to a section in which the user returns from the posture in which the user rotates the joint to the maximum to the reference posture. The angular velocity *θ* of the joint angle in the motion 1 may be positive, and the angular velocity *θ̇* of the joint angle in the motion 2 may be negative. The angular velocity *θ̇* may be expressed as the angular velocity *ω*.

Depending on the implementation, the motion 1 may be a section in which the joint angle *θ* decreases (or the angular velocity *θ̇* is negative), and the motion 2 may be a section in which the joint angle *θ* increases (or the angular velocity *θ̇* is positive).

As an example of the exercise, a squat is shown in FIG. 8.

In the example shown in FIG. 8, the joint angle *θ* (e.g., *θ_{squat}*) of the squat may be the angle formed by the upper body and the lower body.

In the example shown in FIG. 8, a reference posture 810 may be a posture with the joint angle *θ_{squat}* of 0 degrees. The joint angle *θ_{squat}* may increase during the motion from the reference posture 810 to a posture 820, and the joint angle *θ_{squat}* may increase during the motion from the posture 820 to a posture 830. The posture 830 may be a posture in which a user rotates the joint to the maximum joint angle *θ_{squat}.* The joint angle *θ_{squat}* may decrease with during the motion from the posture 830 to a posture 840, and the joint angle *θ_{squat}* may decrease during the motion from the posture 840 to the reference posture 850.

A motion 1 of the squat may be a section in which the joint angle *θ_{squat}* increases (or a section in which the joint angular velocity *θ̇_{squat}* is positive), and a motion 2 of the squat may be a section in which the joint angle *θ_{squat}* decreases (or a section in which the joint angular velocity *θ̇_{squat}* is negative).

Among the motion 1 and the motion 2 of the squat, the user may receive a relatively great exercise load when performing the motion 2, and assisting with the motion 2 may be one of the functions of the wearable device 700. Among the motion 1 and the motion 2 of the squat, the motion 2 may be designated as a main motion. Such designation may be performed in advance or may be performed by the wearable device 700 (or the electronic device 210). Depending on the implementation, the motion 1 of the squat may be designated as the main motion.

As another example of the exercise, a kickback is shown in FIG. 9.

In the example shown in FIG. 9, the joint angle *θ (e.g., θ_{kickback}*) of the kickback may be the angle of one hip joint.

In the example shown in FIG. 9, a reference posture 910 may be a posture with the joint angle *θ_{kickback}* of 0 degrees. The joint angle *θ_{kickback}* may increase during the motion from the reference posture 910 to a posture 920. The joint angle *θ_{kickback}* may decrease during the motion from the posture 920 to a reference posture 930.

A motion 1 of the kickback may be a section in which the joint angle *θ_{kickback}* increases (or a section in which the joint angular velocity *θ̇_{kickback}* is positive), and a motion 2 of the kickback may be a section in which the joint angle *θ_{kickback}* decreases (or a section in which the joint angular velocity *θ̇_{kickback}* is negative).

In an embodiment, as shown in the examples shown in FIGS. 8 and 9, each of the motion 1 and the motion 2 of the exercise may be divided into a first half and a second half. As described later, the wearable device 700 may output a stronger torque in the first half than the second half of the motion 1 or output a stronger torque in the second half than the first half of the motion 1, according to the exercise selected by the user. The wearable device 700 may output a stronger torque in the first half than the second half of the motion 2 or output a stronger torque in the second half than the first half of the motion 2, according to the exercise selected by the user.

Among the motion 1 and the motion 2 of the kickback, the user may receive a relatively great exercise load when performing the motion 1, and assisting with the motion 1 may be one of the functions of the wearable device 700. Among the motion 1 and the motion 2 of the kickback, the motion 1 may be designated as a main motion. Such designation may be performed in advance or may be performed by the wearable device 700 (or the electronic device 210). Depending on the implementation, the motion 2 of the kickback may be designated as the main motion.

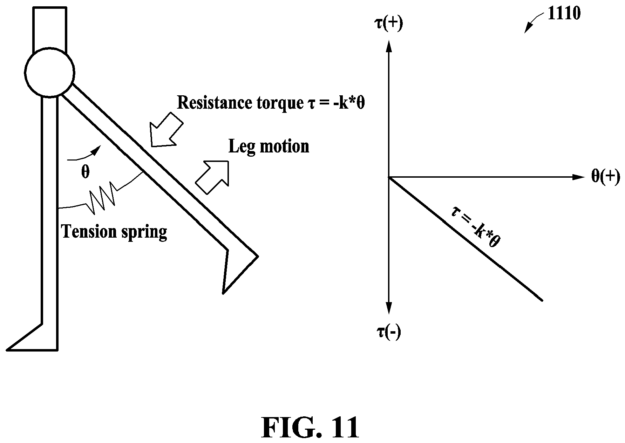

FIGS. 10 and 11 are diagrams illustrating an example of a spring model for providing a torque, of a wearable device according to an example embodiment(s).

Referring to FIG. 10, an example of a compression spring model is shown.

The compression spring model may be a spring model that generates a force in a direction to get the legs apart (e.g., a direction in which the joint angle *θ* increases) as a user brings the legs being apart together (e.g., as the joint angle *θ* decreases). The compression spring model may provide the user with an assistance force (or an assistance torque) when the user gets the legs apart. Depending on the implementation, the compression spring model may provide the user with a resistance force (or a resistance torque) as the user gets the legs apart.

A graph 1010 in FIG. 10 may be a graph between the torque *τ* and the joint angle *θ* in the compression spring model. In the compression spring model, the torque *τ* may be determined according to an equation of *τ = k ** (*α - θ*). In the equation "* "may denote a multiplication sign, and *k* may denote a gain related to the magnitude of the torque. The angle value *α* may be, for example, a predetermined constant value considering an exercise. The angle value *α* may be, for example, the maximum value of the range of motion (ROM) when the exercise is performed or the joint angle in an ideal exercise posture. In the compression spring model, the angle value *α* may correspond to the state in which the compression spring is stretched to its maximum (or the initial position of the compression spring).

In an embodiment, the angle value *α* may vary depending on an exercise. For example, the angle value *α* (e.g., the angle value *α_{squat}*) of the squat described with reference to FIG. 8 may differ from the angle value *α* (e.g., the angle value *α_{kickback}*) of the kickback exercise described with reference to FIG. 9.

In an embodiment, the user may set or adjust the angle value *α* through an electronic device (e.g., the electronic device 210 or the other wearable device 220).

In an embodiment, the user may set or adjust an exercise intensity through the electronic device (e.g., the electronic device 210 or the other wearable device 220). The wearable device 700 may determine the gain k according to the set exercise intensity (or the adjusted exercise intensity).

In an embodiment, the wearable device 700 may output a torque through the compression spring model when the user performs an exercise (e.g., a kickback). At this time, the output torque may correspond to an assistance torque that assists with the main motion (e.g., the motion 1) of the kickback during the main motion and may correspond to a resistance torque that provides resistance to the other motion (e.g., the motion 2) of the kickback during the other motion. In other words, the wearable device 700 may provide the assistance force to the motion 1 of the kickback and provide a resistance force to the motion 2 of the kickback while the user is performing the kickback.

Referring to FIG. 11, an example of a tension spring model is shown.

The tension spring model may be a spring model that generates a force in a direction to bring the legs together (e.g., a direction in which the joint angle *θ* decreases) as a user gets the legs apart in a state in which the joint angle *θ* is 0 degrees (e.g., as the joint angle *θ* increases). The tension spring model may provide the user with a resistance force (or a resistance torque) as the user gets the legs apart. Depending on the implementation, the tension spring model may provide the user with an assistance force (or an assistance torque) as the user gets the legs apart.

A graph 1110 in FIG. 11 may be a graph between the torque *τ* and the joint angle *θ* in the tension spring model. In the tension spring model, the torque *τ* may be determined according to an equation of *τ = -k * θ*.

In an embodiment, the wearable device 700 may output a torque through the tension spring model when the user performs an exercise (e.g., a kickback). At this time, the output torque may correspond to a resistance torque that provides resistance to the main motion (e.g., the motion 1) of the kickback during the main motion and may correspond to an assistance torque that assists with the other motion (e.g., the motion 2) of the kickback during the other motion. In other words, the wearable device 700 may provide the resistance force to the motion 1 of the kickback and provide an assistance force to the motion 2 of the kickback while the user is performing the kickback.

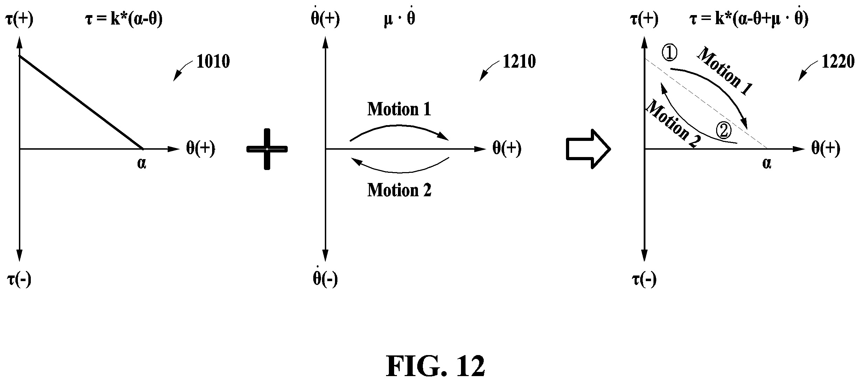

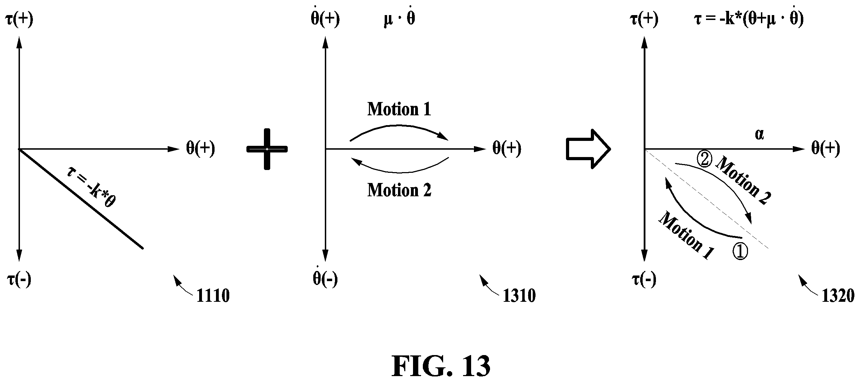

FIGS. 12 and 13 are diagrams illustrating an example of an expanded spring model for providing a torque, of a wearable device according to an example embodiment(s).

The graph 1010 for the torque in the compression spring model is shown in FIG. 12.

The wearable device 700 may output a torque through the compression spring model when the user performs an exercise (e.g., a kickback). The wearable device 700 may provide an assistance force (or an assistance torque) to a motion 1 of the kickback and provide a resistance force (or a resistance torque) to a motion 2 of the kickback while the user is performing the kickback. At this time, the resistance force (or the resistance torque) may cause discomfort to the user who performs the motion 2. In other words, while the user lowers his or her leg, the user may receive a resistance force from the wearable device 700, and this resistance force may cause discomfort to the user.

In an embodiment, hysteresis factors (e.g., a hysteresis value *µ* and an angular velocity *θ̇*) may be applied to the compression spring model. The hysteresis factors may be, for example, factors that change the magnitude of a torque of the compression spring model according to the motion direction of the user (e.g., the direction in which the joint angle increases or the direction in which the joint angle decreases). The hysteresis value *µ* may be a constant, and correspond to the coefficient of the angular velocity *θ̇*. As in an example shown in FIG. 12, the hysteresis factors (e.g., *µ · θ̇*) may be applied to the torque *τ = k ** (*α - θ*) of the compression spring model, such that the torque *τ = k ** (*α - θ* + *µ · θ̇*) of an expanded compression spring model to which the compression spring model is expanded may be determined. A graph 1210 in FIG. 12 may be a graph of the hysteresis factors (e.g., *µ · θ̇*), and a graph 1220 of FIG. 12 may be a graph of the torque of the expanded compression spring model. The graph 1220 may correspond to an example of a torque pattern based on the extended compression spring model.

Referring to the graph 1220 of FIG. 12, the wearable device 700 may output a relatively stronger torque when the user performs the motion 1 than when the user performs the motion 2. For example, the user may perform a kickback. Compared to the compression spring model, the wearable device 700 may output a relatively greater assistance force (or assistance torque) during the motion 1 and output a relatively smaller resistance force (or resistance torque) during the motion 2 through the expanded compression spring model. Accordingly, while the user performs the motion 2 of the kickback, the user may receive a relatively weak resistance force, and thus, the discomfort that the user feels may be reduced or alleviated compared to the compression spring model.

The graph 1110 for the torque in the tension spring model is shown in FIG. 13.

In an embodiment, hysteresis factors (e.g., a hysteresis value *µ* and an angular velocity *θ̇*) may be applied to the tension spring model. As the hysteresis factors are applied to the tension spring model, the magnitude of a torque of the tension spring model according to the motion direction of the user (e.g., the direction in which the joint angle increases or the direction in which the joint angle decreases) may change. As in an example shown in FIG. 13, the hysteresis factors (e.g., *µ · θ̇*) may be applied to the torque *τ = -k * θ* of the tension spring model, such that the torque *τ* = *-k ** (*θ* + *µ · θ̇)* of an expanded tension spring model to which the tension spring model is expanded may be determined. A graph 1310 in FIG. 13 may be a graph of the hysteresis factors (e.g., *µ* · *θ̇*)*,* and a graph 1320 of FIG. 13 may be a graph of the torque of the expanded tension spring model. The graph 1320 may correspond to an example of a torque pattern based on the extended tension spring model.

Referring to the graph 1320 of FIG. 13, the wearable device 700 may output a relatively stronger torque when the user performs the motion 1 than when the user performs the motion 2. For example, the user may perform a kickback. Compared to the tension spring model, the wearable device 700 may output a relatively greater resistance force (or resistance torque) during the motion 1 and output a relatively smaller assistance force (or assistance torque) during the motion 2 through the expanded tension spring model.

In an embodiment, the hysteresis value *µ* may vary depending on an exercise. For example, the hysteresis value *µ* (e.g., the hysteresis value *µ_{squat}*) of a squat and the hysteresis value *µ* (e.g., the hysteresis value *µ_{kickback}*) of a kickback may be different from each other.

In an embodiment, the user may set or adjust the hysteresis value *µ* through an electronic device (e.g., the electronic device 210 or the other wearable device 220).

Hereinafter, torque patterns based on expanded spring models (e.g., the expanded compression spring model and the expanded tension spring model) will be described.

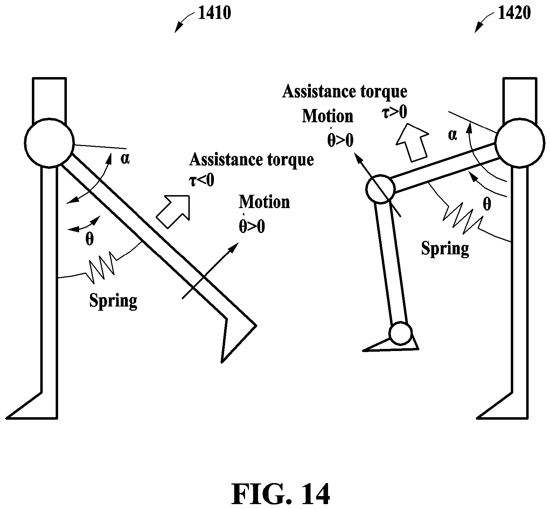

FIGS. 14 to 25 are diagrams illustrating torque patterns in a first mode and a second mode of a wearable device according to an example embodiment(s).

Referring to FIG. 14, a motion 1 1410 of a kickback and a motion 1 1420 of a knee-up are shown. The knee-up may include the motion 1 in which the hip joint angle increases and a motion 2 in which the hip joint angle decreases. Among the motion 1 and the motion 2 of the knee-up, the motion 1 may be a main motion.

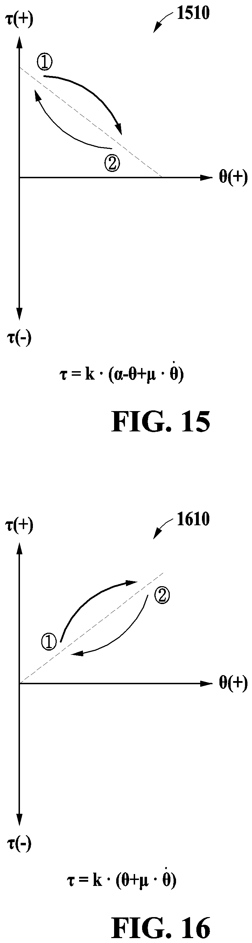

As described above, the motion 1 1410 or 1420 may be divided into a first half and a second half. An example of a torque pattern for assisting with the first half of the motion 1 1410 or 1420 is shown in FIG. 15, and an example of a torque pattern for assisting with the second half of the motion 1 1410 or 1420 is shown in FIG. 16.

In the example shown in FIG. 15, the wearable device 700 may output a torque *τ* = k · (*α - θ* + *µ* · *θ̇*) according to a torque pattern 1510 when the user performs an exercise. In the example shown in FIG. 16, the wearable device 700 may output a torque *τ = k* · (*θ* + *µ · θ̇*) according to a torque pattern 1610 when the user performs an exercise. The torque according to the torque pattern 1510 and the torque according to the torque pattern 1610 may have the same rotation direction, but may correspond to an assistance torque in the motion 1 1410 or 1420 (① in FIGS. 15 and 16) and may correspond to a resistance torque in the motion 2 (② in FIGS. 15 and 16).

In an embodiment, the user may select an exercise (hereinafter, referred to as "exercise A") in which a first half of a main motion of a kickback (or knee-up) is assisted through an electronic device and may set an exercise intensity of the exercise A. The processor 710 of the wearable device 700 may receive the exercise A selected by the user and the exercise intensity of the exercise A from the electronic device through the communication module 730 comprising communication circuitry. The processor 710 may select parameters (e.g., *α_{A}* and *µ_{A}*) mapped to the exercise A, and determine (or set) a gain (e.g., k*_{A}*) based on the received exercise intensity. The processor 710 may receive angle data (e.g., *θ_{A}*) from the sensor 740 (e.g., the angle sensor 125), and generate angular velocity data (e.g., *θ̇_{A}*) based on the received angle data (e.g., *θ_{A}*). The processor 710 may determine control information (e.g., *k_{A}* · (*α_{A} - θ_{A} + µ_{A}* · *θ̇_{A}*)) for generating a torque based on the selected parameters (e.g., *α_{A}* and *µ_{A}*), the determined gain (e.g., k*_{A}*), the angle data (e.g., *θ_{A}*), and the angular velocity data (e.g., *θ̇_{A}*). The processor 710 may control the driving module 720 (comprising a motor and/or circuitry) to output a torque according to the torque pattern 1510 corresponding to the selected exercise A based on the determined control information. The wearable device 700 may output a torque according to *τ =* k*_{A}* · (*α_{A} - θ_{A} + µ_{A} · θ̇_{A}*).

In an embodiment, the user may select an exercise (hereinafter, referred to as "exercise B") in which a second half of a main motion of a kickback (or knee-up) is assisted through an electronic device and may set an exercise intensity of the exercise B. The processor 710 of the wearable device 700 may receive the exercise B selected by the user and the exercise intensity of the exercise B from the electronic device through the communication module 730. The processor 710 may select a parameter (e.g., *µ_{B}*) mapped to the exercise B, and determine (or set) a gain (e.g., k*_{B}*) based on the received exercise intensity. The processor 710 may receive angle data (e.g., *θ_{B}*) from the sensor 740 (e.g., the angle sensor 125), and generate angular velocity data (e.g., *θ̇_{B}*) based on the received angle data (e.g., *θ_{B}* )*.* The processor 710 may determine control information (e.g., k*_{B}* · (*θ_{B} + µ_{B} · θ̇_{B}*)) for generating a torque based on the selected parameter (e.g., *µ_{B}*), the determined gain (e.g., k*_{B}*), the angle data (e.g., *θ_{B}*), and the angular velocity data (e.g., *θ̇_{B}*). The processor 710 may control the driving module 720 to output a torque according to the torque pattern 1610 corresponding to the selected exercise B based on the determined control information. The wearable device 700 may output a torque according to *τ = k_{B} ·* (*θ_{B} + µ_{B}* · *θ̇_{B}*)*.*

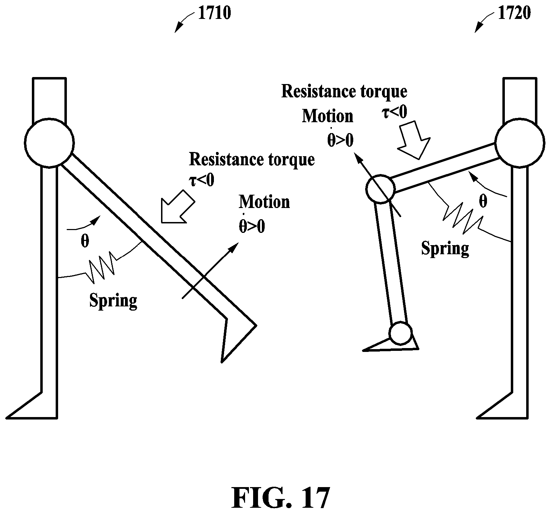

Referring to FIG. 17, a motion 1 1710 of a kickback and a motion 1 1720 of a knee-up are shown.

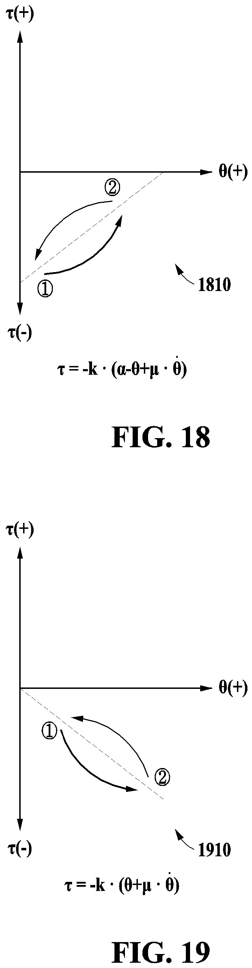

An example of a torque pattern for providing resistance to the first half of the motion 1 1710 or 1720 is shown in FIG. 18, and an example of a torque pattern for providing resistance to the second half of the motion 1 1710 or 1720 is shown in FIG. 19.

In the example shown in FIG. 18, the wearable device 700 may output a torque *τ = -k* · (*α - θ* + *µ* · *θ̇*) according to a torque pattern 1810 when the user performs an exercise. In the example shown in FIG. 19, the wearable device 700 may output a torque *τ = -k ·* (*θ* + *µ · θ̇*) according to a torque pattern 1910 when the user performs an exercise. The torque according to the torque pattern 1810 and the torque according to the torque pattern 1910 may have the same rotation direction, but may correspond to a resistance torque in the motion 1 1710 or 1720 (① in FIGS. 18 and 19) and may correspond to an assistance torque in the motion 2 (② in FIGS. 18 and 19).

In an embodiment, the user may select an exercise (hereinafter, referred to as "exercise C") in which the wearable device 700 provides resistance to a first half of a main motion (e.g., a motion 1) of a kickback (or knee-up) through an electronic device and may set an exercise intensity of the exercise C. The processor 710 of the wearable device 700 may receive the exercise C selected by the user and the exercise intensity of the exercise C from the electronic device through the communication module 730. The processor 710 may select parameters (e.g., *α_{C}* and *µ_{C}*) mapped to the exercise C, and determine (or set) a gain (e.g., -k*_{C}*) based on the received exercise intensity. The processor 710 may receive angle data (e.g., *θ_{C}*) from the sensor 740 (e.g., the angle sensor 125), and generate angular velocity data (e.g., *θ̇_{C}*) based on the received angle data (e.g., *θ_{C}*)*.* The processor 710 may determine control information (e.g., *-k_{C} ·* (*α_{c} - θ_{C}* + *µ_{c} · θ̇_{C}*)) for generating a torque based on the selected parameters (e.g., *α_{C}* and *µ_{C}*), the determined gain (e.g., -k*_{C}*), the angle data (e.g., *θ_{C}*), and the angular velocity data (e.g., *θ̇_{C}*)*.* The processor 710 may control the driving module 720 to output a torque according to the torque pattern 1810 corresponding to the selected exercise C based on the determined control information. The wearable device 700 may output a torque according to *τ =* - k*_{C}* · (*α_{c} - θ_{C}* + *µ_{c} ⁻ θ̇_{C}*).

In an embodiment, the user may select an exercise (hereinafter, referred to as "exercise D") in which the wearable device 700 provides resistance to a second half of a main motion of a kickback (or knee-up) through an electronic device and may set an exercise intensity of the exercise D. The processor 710 of the wearable device 700 may receive the exercise D selected by the user and the exercise intensity of the exercise D from the electronic device through the communication module 730. The processor 710 may select a parameter (e.g., *µ_{D}*) mapped to the exercise D, and determine (or set) a gain (e.g., -k*_{D}*) based on the received exercise intensity. The processor 710 may receive angle data (e.g., *θ*_{D}) from the sensor 740 (e.g., the angle sensor 125), and generate angular velocity data (e.g., *θ̇*_{D}) based on the received angle data (e.g., *θ*_{D}). The processor 710 may determine control information (e.g., - k*_{D}* · (*θ*_{D} + *µ_{D}* · *θ̇*_{D})) for generating a torque based on the selected parameter (e.g., *µ_{D}*), the determined gain (e.g., -k*_{D}*), the angle data (e.g., *θ*_{D}), and the angular velocity data (e.g., *θ̇*_{D}). The processor 710 may control the driving module 720 to output a torque according to the torque pattern 1910 corresponding to the selected exercise D based on the determined control information. The wearable device 700 may output a torque according to *τ* = -k*_{D}* · (*θ*_{D} + *µ_{D}* · *θ̇*_{D}).

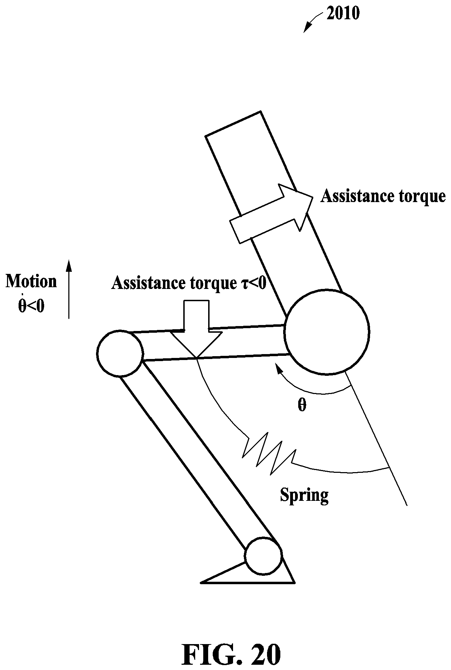

Referring to FIG. 20, a main motion (e.g., a motion 2) of a squat is shown.

As described above, the main motion (e.g., the motion 2 2010) of the squat may be divided into a first half and a second half.

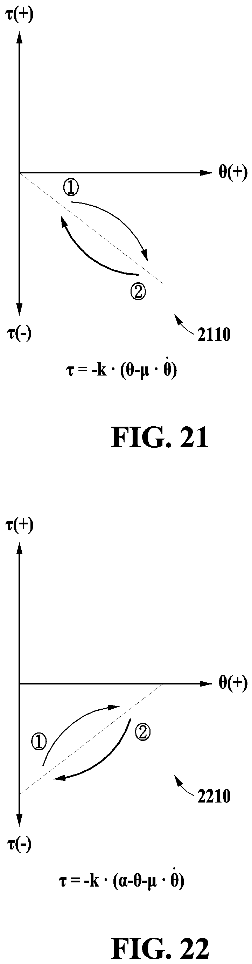

An example of a torque pattern for assisting with the first half of the motion 2 2010 of the squat is shown in FIG. 21, and an example of a torque pattern for assisting with the second half of the motion 2 2010 of the squat is shown in FIG. 22.

In the example shown in FIG. 21, the wearable device 700 may output a torque *τ = -k* · (*θ* - *µ* · *θ̇*) according to a torque pattern 2110 when the user performs an exercise. In the example shown in FIG. 22, the wearable device 700 may output a torque *τ = -k* · (*α - θ* - *µ* · *θ̇*) according to a torque pattern 2210 when the user performs an exercise. The torque according to the torque pattern 2110 and the torque according to the torque pattern 2210 may have the same rotation direction, but may correspond to an assistance torque in the motion 2 (② in FIGS. 21 and 22) of the squat and may correspond to a resistance torque in the motion 1 (① in FIGS. 21 and 22) of the squat.

In an embodiment, the user may select an exercise (hereinafter, referred to as "exercise E") in which a first half of a main motion (e.g., a motion 2) of a squat is assisted through an electronic device and may set an exercise intensity of the exercise E. The processor 710 of the wearable device 700 may receive the exercise E selected by the user and the exercise intensity of the exercise E from the electronic device through the communication module 730. The processor 710 may select a parameter (e.g., *µ_{E}*) mapped to the exercise E, and determine (or set) a gain (e.g., -k*_{E}*) based on the received exercise intensity. The processor 710 may receive angle data (e.g., *θ*_{E}) from the sensor 740 (e.g., the angle sensor 125), and generate angular velocity data (e.g., *θ̇*_{E}) based on the angle data (e.g., *θ*_{E}). The processor 710 may determine control information (e.g., -k*E* · (*θ*_{E} - *µ_{E}* · *θ̇*_{E})) for generating a torque based on the selected parameter (e.g., *µ_{E}*), the determined gain (e.g., -k*_{E}*), the angle data (e.g., *θ*_{E}), and the angular velocity data (e.g., *θ̇*_{E}). The processor 710 may control the driving module 720 to output a torque according to the torque pattern 2110 corresponding to the selected exercise E based on the determined control information. The wearable device 700 may output a torque according to *τ* = *-*k*_{E}* · (*θ*_{E} - *µ_{E}* · *θ̇*_{E}).

In an embodiment, the user may select an exercise (hereinafter, referred to as "exercise F") in which a second half of a main motion (e.g., a motion 2) of a squat is assisted through an electronic device and may set an exercise intensity of the exercise F. The processor 710 of the wearable device 700 may receive the exercise F selected by the user and the exercise intensity of the exercise F from the electronic device through the communication module 730. The processor 710 may select parameters (e.g., *α_{F}* and *µ_{F}*) mapped to the exercise F, and determine (or set) a gain (e.g., -k*_{F}*) based on the received exercise intensity. The processor 710 may receive angle data (e.g., *θ*_{F}) from the sensor 740 (e.g., the angle sensor 125), and generate angular velocity data (e.g., *θ̇*_{F}) based on the angle data (e.g., *θ*_{F} ). The processor 710 may determine control information (e.g., -k*_{F}* · (*α_{F} - θ*_{F} *- µ_{F}* · *θ̇*_{F})) for generating a torque based on the selected parameters (e.g., *α_{F}* and *µ_{F}*), the determined gain (e.g., -k*_{F}*), the angle data (e.g., *θ*_{F}), and the angular velocity data (e.g., *θ̇*_{F})*.* The processor 710 may control the driving module 720 to output a torque according to the torque pattern 2210 corresponding to the selected exercise F based on the determined control information. The wearable device 700 may output a torque according to *τ = -*k*_{F}* · (*α_{F} - θ*_{F} *- µ_{F}* · *θ̇*_{F}).

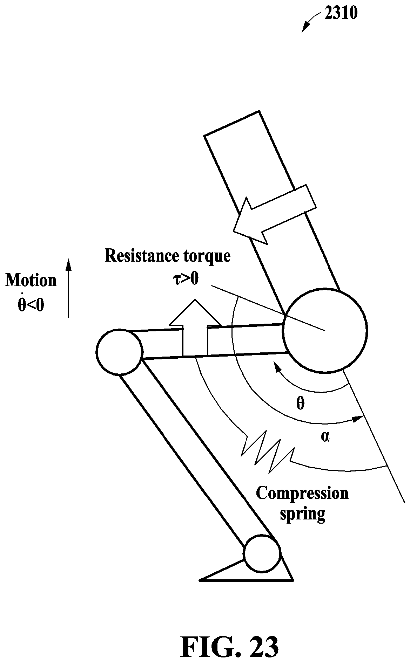

Referring to FIG. 23, a main motion (e.g., a motion 2) of a squat is shown.

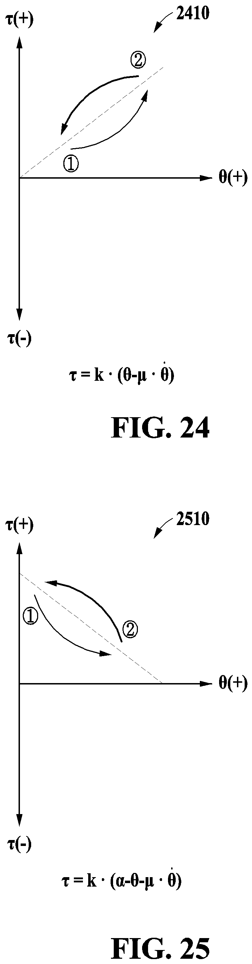

An example of a torque pattern for providing resistance to the first half of the motion 2 2310 of the squat is shown in FIG. 24, and an example of a torque pattern for providing resistance to the second half of the motion 2 2310 of the squat is shown in FIG. 25.

**In** the example shown in FIG. 24, the wearable device 700 may output a torque *τ = k* · (*θ* - *µ* · *θ̇*) according to a torque pattern 2410 when the user performs an exercise. **In** the example shown in FIG. 25, the wearable device 700 may output a torque *τ = k* · (*α - θ* - *µ · θ̇*) according to a torque pattern 2510 when the user performs an exercise. The torque according to the torque pattern 2410 and the torque according to the torque pattern 2510 may have the same rotation direction, but may correspond to a resistance torque in the motion 2 (② in FIGS. 24 and 25) of the squat and may correspond to an assistance torque in the motion 1 (① in FIGS. 24 and 25) of the squat.

**In** an embodiment, the user may select an exercise (hereinafter, referred to as "exercise G") in which the wearable device 700 provides resistance to a first half of a main motion (e.g., a motion 2) of a squat through an electronic device and may set an exercise intensity of the exercise G. The processor 710 of the wearable device 700 may receive the exercise G selected by the user and the exercise intensity of the exercise G from the electronic device through the communication module 730. The processor 710 may select a parameter (e.g., *µ_{G}*) mapped to the exercise G, and determine (or set) a gain (e.g., k*_{G}*) based on the received exercise intensity. The processor 710 may receive angle data (e.g., *θ*_{G}) from the sensor 740 (e.g., the angle sensor 125). The processor 710 may determine (or generate) angular velocity data (e.g., *θ̇*_{G}) based on the angle data (e.g., *θ*_{G}). The processor 710 may determine control information (e.g., k*_{G}* · (*θ*_{G} - *µ_{G} · θ̇*_{G})) for generating a torque based on the selected parameter (e.g., *µ_{G}*), the determined gain (e.g., k*_{G}*), the angle data (e.g., *θ*_{G}), and the angular velocity data (e.g., *θ̇*_{G}). The processor 710 may control the driving module 720 to output a torque according to the torque pattern 2410 corresponding to the selected exercise G based on the determined control information. The wearable device 700 may output a torque according to *τ* = k*_{G}* · (*θ*_{G} - *µ_{G} · θ̇*_{G}).

In an embodiment, the user may select an exercise (hereinafter, referred to as "exercise H") in which the wearable device 700 provides resistance to a second half of a main motion (e.g., a motion 2) of a squat through an electronic device and may set an exercise intensity of the exercise H. The processor 710 of the wearable device 700 may receive the exercise H selected by the user and the exercise intensity of the exercise H from the electronic device through the communication module 730. The processor 710 may select parameters (e.g., *α_{H}* and *µ_{H}*) mapped to the exercise H, and determine (or set) a gain (e.g., k*_{H}*) based on the received exercise intensity. The processor 710 may receive angle data (e.g., *θ*_{H}) from the sensor 740 (e.g., the angle sensor 125). The processor 710 may determine (or generate) angular velocity data (e.g., *θ̇_{squat}*) based on the angle data (e.g., *θ_{squat} ).* The processor 710 may determine control information (e.g., k*_{H} ·* (*α_{H} - θ_{squat} - µ_{H}* · *θ̇_{squat}*)) for generating a torque based on the selected parameters (e.g., *α_{H}* and *µ_{H}*), the determined gain (e.g., k*_{H}*), the angle data (e.g., *θ_{squat}*), and the angular velocity data (e.g., *θ̇_{squat}*). The processor 710 may control the driving module 720 to output a torque according to the torque pattern 2510 corresponding to the selected exercise H based on the determined control information. The wearable device 700 may output a torque according to *τ* = k*_{H}* · (*α_{H} - θ_{squat} - µ_{H}* · *θ̇_{squat}*).

In an embodiment, in a first mode, the wearable device 700 may output torques in the same direction (or torques in one direction) during the motion 1 and the motion 2 and output an assistance torque (e.g., a torque according to the torque pattern 1510, 1610, 2110, or 2210) that assists with a designated motion (e.g., a main motion) among the motion 1 and the motion 2.

In an embodiment, in a second mode, the wearable device 700 may output torques in the same direction (or torques in one direction) during the motion 1 and the motion 2 and output a resistance torque (e.g., a torque according to the torque pattern 1810, 1910, 2410, or 2510) that provides resistance to a designated motion (e.g., a main motion) among the motion 1 and the motion 2.

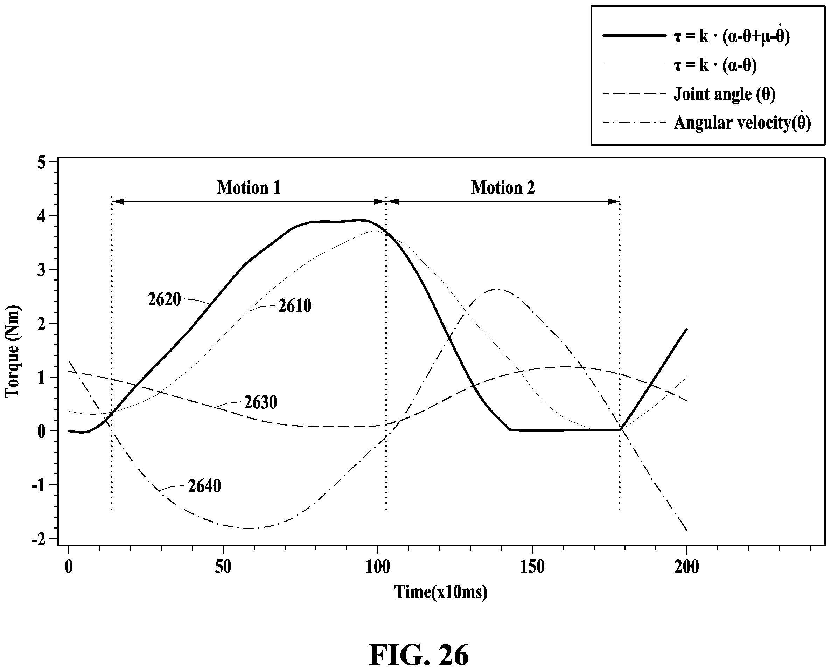

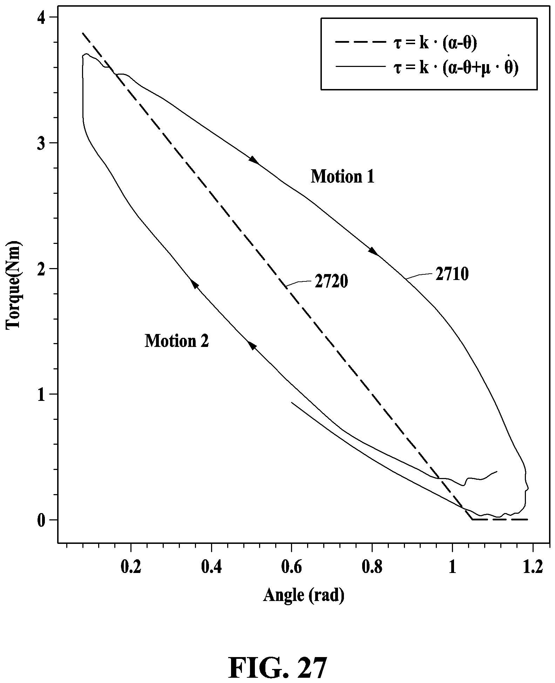

FIGS. 26 and 27 are graphs of torques of a wearable device according to an example embodiment(s).

Referring to FIG. 26, a graph 2610 may be a graph for a torque (e.g., *τ = k ·* (*α* - *θ*)) based on a compression spring model according to time, and a graph 2620 may be a graph for a torque (e.g., *τ = k* · (*α - θ* + *µ* · *θ̇*)) based on an expanded compression spring model according to time. A graph 2630 may represent the joint angle (or angle data) *θ* when a user performs an exercise (e.g., a kickback exercise), and a graph 2640 may represent the angular velocity (or angular velocity data) *θ̇.*

Comparing the graph 2610 with the graph 2620 in a motion 1, the wearable device 700 may output a greater assistance torque in the expanded compression spring model than in the compression spring model. Comparing the graph 2610 with the graph 2620 in a motion 2, the wearable device 700 may output a smaller resistance torque in the expanded compression spring model than in the compression spring model. Accordingly, the user may receive a greater assistance force when raising the leg and a smaller resistance force when lowering the leg.

Referring to FIG. 27, graphs 2710 and 2720 for a torque according to the joint angle are shown.

The graph 2710 may be a graph for a torque (e.g., *τ = k ·* (*α - θ* + *µ · θ̇*)) based on an expanded compression spring model according to joint angle, and the graph 2720 may be a graph for a torque (e.g., *τ = k* · (*α - θ*)) based on a compression spring model according to joint angle.

Referring to the graph 2720, a torque of the same magnitude may be output at the same joint angle, irrespective of the motion direction of the user (e.g., the direction in which the joint angle increases or the direction in which the joint angle decreases). For example, in the graph 2720, the torque magnitude for the motion 1 may be the same as the torque magnitude for the motion 2 at the same joint angle.

Referring to the graph 2710, torques of different magnitudes may be output at the same joint angle, according to the motion direction of the user (e.g., the direction in which the joint angle increases and the direction in which the joint angle decreases). For example, in the graph 2710, the torque magnitude for the motion 1 may be different from the torque magnitude for the motion 2 at the same joint angle.

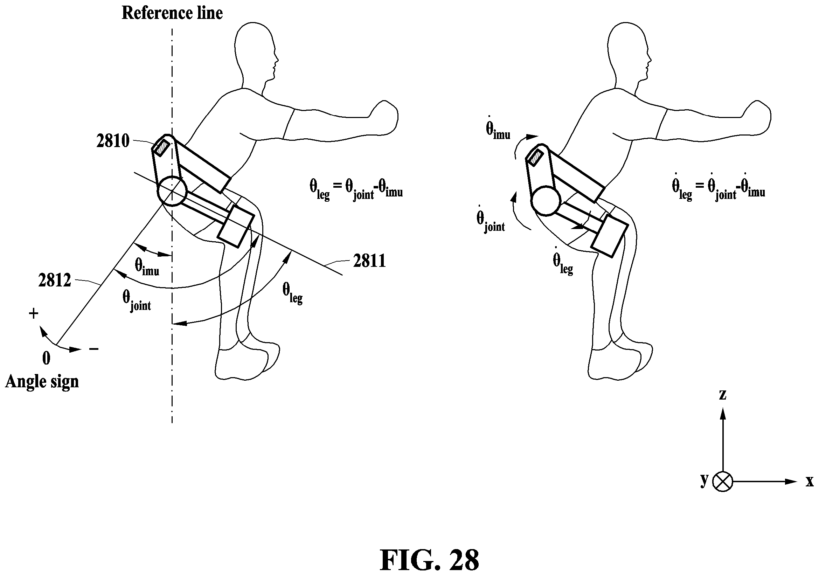

FIGS. 28 to 31, 32A-32C, 33 and 34 are diagrams illustrating torque patterns in a third mode and a fourth mode of a wearable device according to an example embodiment(s).

Referring to FIG. 28, the wearable device 700 may determine (or generate) the angle (or the hip joint angle) *θⱼₒᵢₙₜ* formed by a line 2812 of the upper body and a line 2811 of the lower body of a user, using an IMU 2810 (e.g., the IMU 135) and/or the angle sensor 125. The angle *θⱼₒᵢₙₜ* may correspond to the joint angle *θ_{squat}* of an exercise (e.g., a squat). Embodiments are not limited thereto, and the wearable device 700 may generate angle data obtained by measuring the joint angle *θ_{squat}* using the angle sensor 125.

An angle *θᵢₘᵤ* in FIG. 28 may be the angle formed by the Y-axis of the IMU 2810 with respect to a reference line (e.g., gravity line).

An angle *θ_{leg}* in FIG. 28 may be a leg angle, and correspond to the difference between the angle *θⱼₒᵢₙₜ* and the angle *θᵢₘᵤ.*

As described later, in an embodiment, the wearable device 700 may output a torque according to *τ = k ·* (*θ̇ + θ̇_{offset}*) *·̇ θ* or *τ = -k* · (*θ̇ + θ̇_{offset}*) · *θ*. At this time, *θ* may be the angle *θⱼₒᵢₙₜ* of one joint (e.g., *θ_{joint.left}* or *θ_{joint.right}*) or may be the mean (*θ_{joint.teft} + θ_{joint.right}*)/*2* of the angles of both joints.

In an embodiment, the wearable device 700 may calculate at least one or all of the mean *θ_{leg.mean}* = (*θ_{leg.left} + θ_{leg.right}*)/2 of the angles of both legs, the difference *θ_{leg.diff} = θ_{leg.left} - θ_{leg.right}* between the angles of both legs, or the difference *θ_{joint.diff}* = *θ_{joint.left} - θ_{joint.right}* of the angles of both joints.

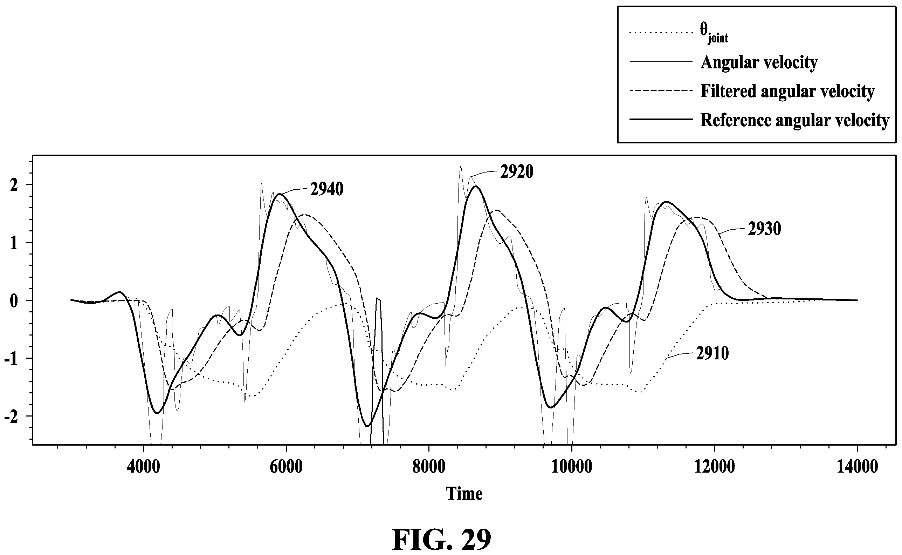

Referring to FIG. 29, a graph 2910 may represent the calculated joint angle (or angle data) *θⱼₒᵢₙₜ,* a graph 2920 may represent the calculated joint angular velocity (or angular velocity data) *θ̇ⱼₒᵢₙₜ*, a graph 2930 may represent the joint angular velocity *θ̇_{joint_filter}* filtered by a low-pass filter (LPF), and a graph 2940 may represent a reference angular velocity. The reference angular velocity may represent the actual hip joint angular velocity of a user.

The waveform of the graph 2920 is not smooth. In other words, the calculated joint angular velocity corresponding to the graph 2920 may include noise. The calculated joint angular velocity may include noise due to shaking according to the wearing state of the wearable device 700 and instantaneous movement caused by the generation of a torque by the motor.

When the calculated joint angular velocity is filtered through the LPF, the waveform may be smoothed as shown in the graph 2930. However, the filtering may cause a delay in the graph 2930, compared to the graph 2940 (e.g., the reference angular velocity). The torque output according to *τ* = *θ̇_{joint-filter}* may differ temporally from the reference angular velocity, so the torque may be output with inappropriate timing.

To ensure that the torque is output with appropriate time, a scaling factor may be applied to *θ̇_{joint_filter}.*

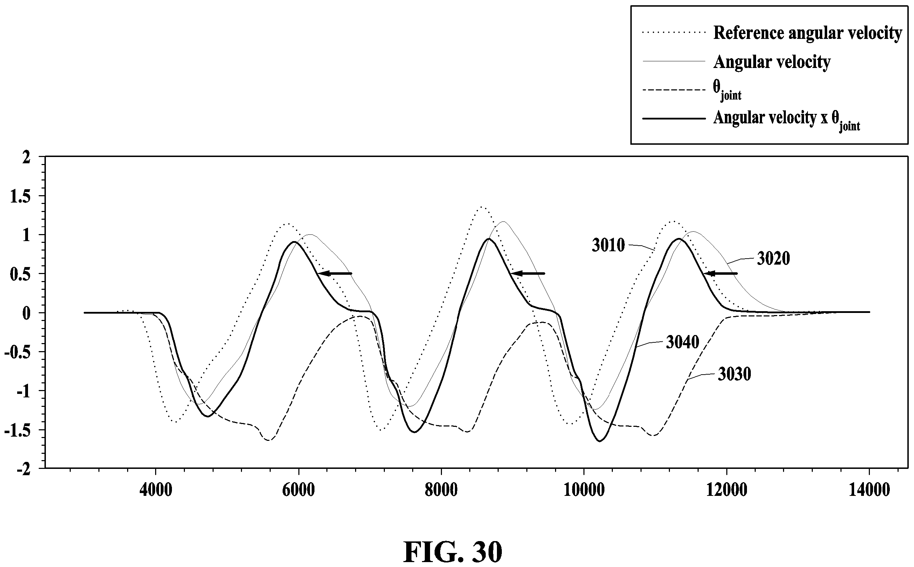

Referring to FIG. 30, a graph 3010 may represent a reference angular velocity, a graph 3020 may represent a filtered joint angular velocity (or filtered angular velocity data) *θ̇_{joint_filter},* a graph 3030 may represent a calculated joint angle (or angle data) *θⱼₒᵢₙₜ,* and a graph 3040 may represent a result (e.g., *-θ̇_{joint-filter}* · *θⱼₒᵢₙₜ*) of applying the calculated joint angle *θⱼₒᵢₙₜ* to *θ̇_{joint_filter}* as a scaling factor.

The waveform of the graph 3040 (or *-θ̇_{joint-filter}* · *θⱼₒᵢₙₜ*) may be more similar to the waveform of the graph 3010 (e.g., the reference angular velocity) than the waveform of the graph 3020 (or *θ̇_{joint_filter}*)*.*

Depending on the embodiment, an offset angular velocity *θ̇_{offset}* may be applied to *θ̇_{joint_filter}* · *θⱼₒᵢₙₜ.* For example, (*θ̇_{joint_filter} + θ̇_{offset}*) · *θⱼₒᵢₙₜ* may be satisfied.

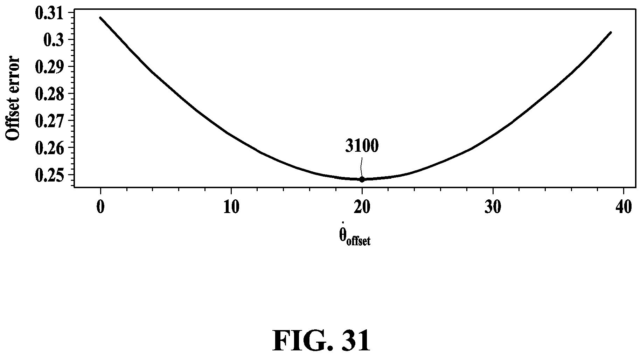

The optimal value of *θ̇_{offset}* may be determined so that (*θ̇_{joint_fitter} + θ̇_{offset}*) · *θⱼₒᵢₙₜ* may be as close as possible to the reference angular velocity. for example, *θ̇_{offset}* that minimizes a root mean square error (RMSE) between (*θ̇_{joint_filter} + θ̇_{offset}*) · *θⱼₒᵢₙₜ* and the reference angular velocity may be determined. As in the example shown in FIG. 31, the RMSE (the offset error of FIG. 31) may be at minimum 3100 when *θ̇_{offset}* is 20, for example. *θ̇_{offset}* that minimizes the RMSE is not limited to the foregoing example, *θ̇_{offset}* may vary depending on a user, a type of exercise, etc.

In an embodiment, the wearable device 700 may apply a gain (e.g., k or -k) to (*θ̇_{joint_filter} + θ̇_{offset}*) *· θⱼₒᵢₙₜ.* The wearable device 700 may output an assistance torque according to *τ* = k *·* (*θ̇_{joint_filter} + θ̇_{offset}*) · *θⱼₒᵢₙₜ* or output a resistance torque according to *τ* = -k · (*θ̇_{joint_filter} + θ̇_{offset}*) · *θⱼₒᵢₙₜ*. For convenience of description, *θ̇_{joint_filter}* may be simply denoted as *θ̇*, and *θⱼₒᵢₙₜ* may be simply denoted as *θ*.

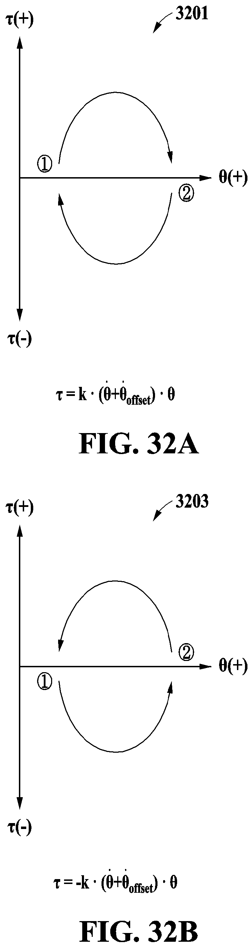

FIG. 32A shows an example *τ = k* · (*θ̇ + θ̇_{offset}*) *· θ* of a torque pattern 3201 in a third mode, and FIG. 32B shows an example *τ = -k ·* (*θ̇ + θ̇_{offset}*) *· θ* of a torque pattern 3203 in a fourth mode.

In the example shown in FIG. 32A, torques in different directions may be output in a motion 1 (① in FIG. 32A) and a motion 2 (② in FIG. 32A). Similarly, in the example shown in FIG. 32B, torques in different directions may be output in a motion 1 (① in FIG. 32B) and a motion 2 (② in FIG. 32B).

In an embodiment, a user may select an exercise assisted by the wearable device 700 (e.g., an exercise in which the wearable device 700 assists with a motion 1 and a motion 2 of a squat) (hereinafter, referred to as the "exercise I") through the electronic device and set an exercise intensity of the exercise I. The processor 710 of the wearable device 700 may receive the exercise I selected by the user and the exercise intensity of the exercise I from the electronic device through the communication module 730. The processor 710 may select a parameter (e.g., *θ̇_{offset_I}*) mapped to the exercise I, and determine (or set) a gain (e.g., k*_{I}*) based on the received exercise intensity. The processor 710 may determine (or generate) angle data (e.g., *θ*_{I}) from the sensor 740 (e.g., the IMU 135 or the angle sensor 125). The processor 710 may determine (or generate) angular velocity data (e.g., *θ̇*_{I}) based on the angle data (e.g., *θ*_{I}). The processor 710 may determine control information (e.g., k*_{I} ·* (*θ̇*_{I} *+ θ̇_{offset_I}*) · *θ*_{I} ) for generating a torque based on the selected parameter (e.g., *θ̇_{offset_I}*), the determined gain (e.g., k*_{I}*), the angle data (e.g., *θ*_{I}), and the angular velocity data (e.g., *θ̇*_{I}). The processor 710 may control the driving module 720 to output a torque according to the torque pattern 3201 corresponding to the selected exercise I based on the determined control information. The wearable device 700 may output a torque according to *τ* = *k*_{I} · (*θ̇*_{I} + *θ̇*_{o*ffset_I*}) · *θI*.

In an embodiment, the user may select an exercise in which the wearable device 700 provides resistance (e.g., an exercise in which the wearable device 700 provides resistance to a motion 1 and a motion 2 of a squat) (hereinafter, referred to as the "exercise J") through the electronic device and set an exercise intensity of the exercise J. The processor 710 of the wearable device 700 may receive the exercise J selected by the user and the exercise intensity of the exercise J from the electronic device through the communication module 730. The processor 710 may select a parameter (e.g., *θ̇_{offset_J}*) mapped to the exercise **J,** and determine (or set) a gain (e.g., -k*_{J}*) based on the received exercise intensity. The processor 710 may receive angle data (e.g., *θ*_{J}) from the sensor 740 (e.g., the IMU 135 or the angle sensor 125). The processor 710 may determine (or generate) angular velocity data (e.g., *θ̇*_{J}) based on the angle data (e.g., *θ*_{J}). The processor 710 may determine control information (e.g., *-*k*_{J} ·* (*θ̇_{J} + θ̇_{off et_J}*) · *θ*_{J}) for generating a torque based on the selected parameter (e.g., *θ̇_{offsect_J}*), the determined gain (e.g., -k*_{J}*), the angle data (e.g., *θ*_{J}), and the angular velocity data (e.g., *θ̇*_{J}). The processor 710 may control the driving module 720 to output a torque according to the torque pattern 3203 corresponding to the selected exercise J based on the determined control information. The wearable device 700 may output a torque according to *τ* = *-*k*_{J} ·* (*θ̇*_{J} *+ θ̇_{offset_J}*) *· θ*_{J}.

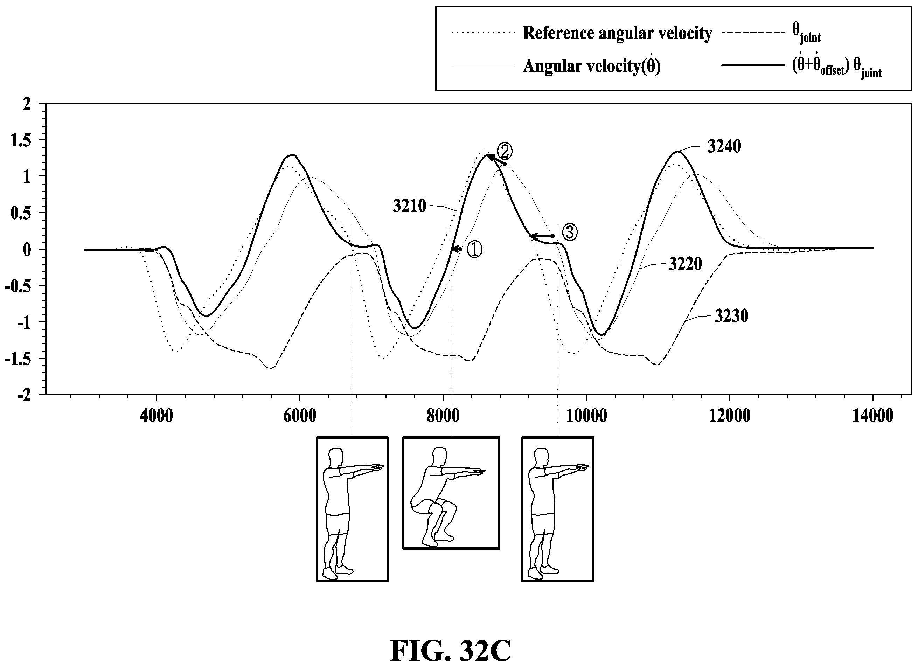

Referring to FIG. 32C, a graph 3210 may represent a reference angular velocity, a graph 3220 may represent a filtered angular velocity *θ̇_{joint_filter},* a graph 3230 may represent a calculated joint angle (or angle data) *θⱼₒᵢₙₜ,* and a graph 3240 may represent (*θ̇ + θ̇_{offset}*) · *θ*.

Comparing the graph 3240 with the graph 3220, the redirection timing of a torque may be faster as indicated by ① in FIG. 32C. The direction of a torque may change later than the time of switching from the motion 1 to the motion 2 in the graph 3220, whereas the direction of a torque may change at the time of switching from the motion 1 to the motion 2 in the graph 3240.

Comparing the graph 3240 with the graph 3220, the timing of a peak angular velocity of the graph 3240 may be faster as indicated by ②. The timing of the peak angular velocity of the graph 3240 may be earlier than the timing of a peak angular velocity of the graph 3220.

Comparing the graph 3240 with the graph 3220, the timing of stopping a torque (e.g., a resistance torque or an assistance torque) may be faster in the graph 3240 than in the graph 3220, as indicated by ③.

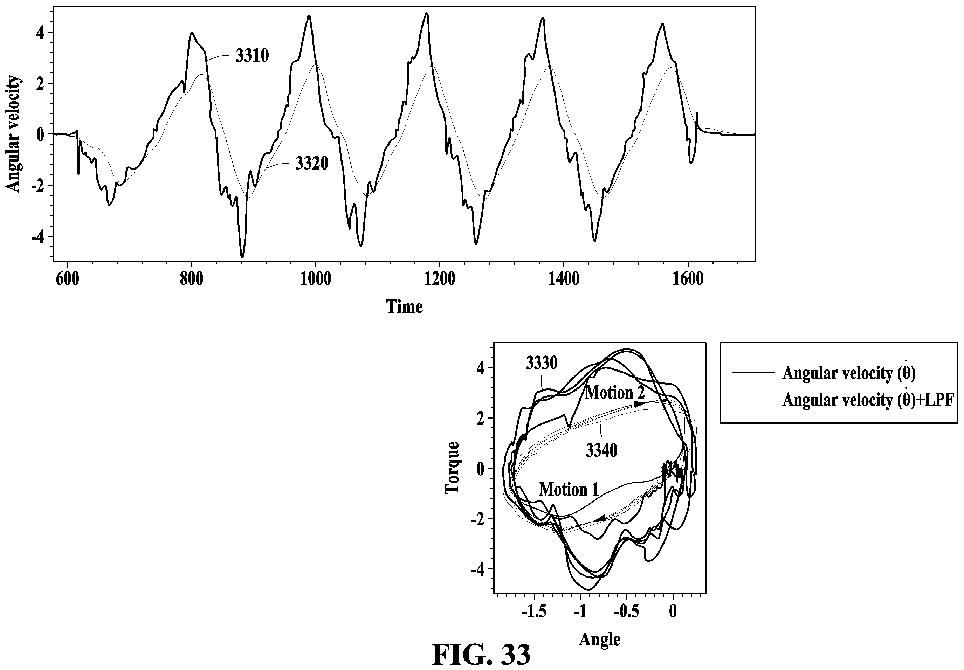

Referring to FIG. 33, a graph 3310 may represent a joint angular velocity (or angular velocity data) *θ̇ⱼₒᵢₙₜ* according to time, a graph 3320 may represent a filtered joint angular velocity *θ̇_{joint_filter}* according to time, a graph 3330 may represent a pattern of a torque (e.g., *τ* = -k · *θ̇ⱼₒᵢₙₜ*) according to angle, and a graph 3340 may represent a pattern of a torque (e.g., *τ* = -k · *θ̇_{joint_filter}*) according to angle.

The filtering may reduce noise in the graph 3320, compared to the graph 3310. Additionally, the filtering may stabilize the pattern of the torque *τ* = *-k · θ̇_{joint_filter},* compared to the pattern of the torque *τ = -k* · *θ̇ⱼₒᵢₙₜ.*

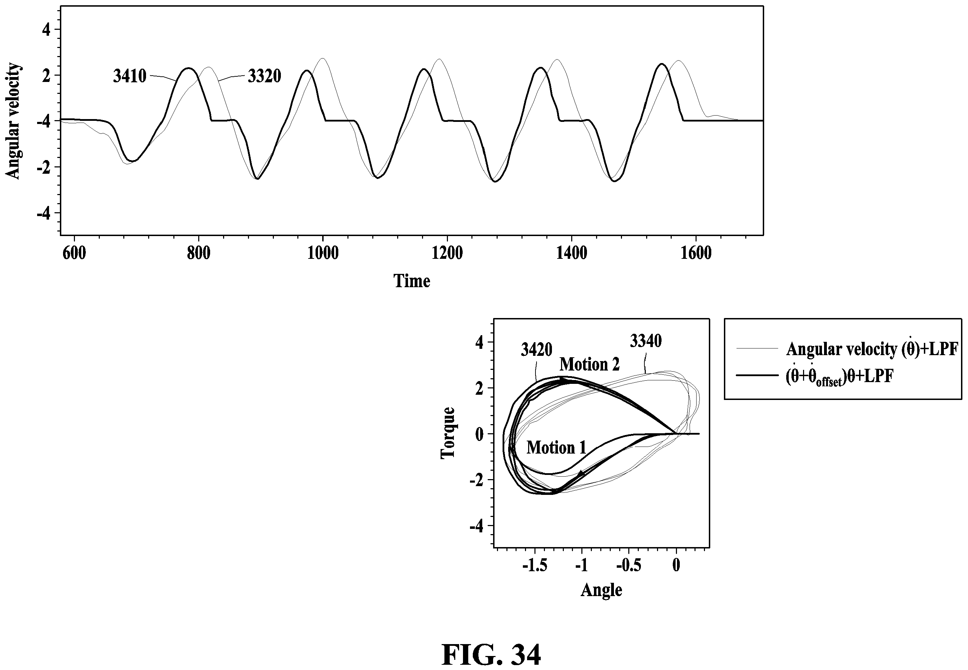

Referring to FIG. 34, a graph 3320 may represent a filtered joint angular velocity *θ̇_{joint_filter}* according to time, a graph 3410 may represent (*θ̇ + θ̇_{offset}*) *· θ* according to time, a graph 3340 may be a pattern of a torque (e.g., *τ* = -k · *θ̇_{joint_filter}*) according to angle, and a graph 3420 may be a pattern of a torque (e.g., *τ* = -k · (*θ̇ + θ̇_{offset}*) · *θ*) according to angle.

Comparing the graphs 3410 and 3420 with the graphs 3320 and 3340, the timing of stopping outputting a torque (e.g., a resistance torque) may be faster in a section in which the user stands up. In the graphs 3320 and 3340, a force (e.g., a resistance force) may be provided to the user even when the user is in a reference posture. In the graphs 3410 and 3420, the force (e.g., the resistance force) provided to the user may be briefly suspended when the user is in the reference posture.

In an embodiment, the electronic device 210 may display an exercise list (e.g., an exercise list including the exercise A to the exercise J) on a display, receive a selection input for a predetermined exercise on the exercise list from the user, and receive an exercise intensity for the exercise selected by the user. The electronic device 210 may transmit the exercise selected by the user and the exercise intensity to the wearable device 700. The wearable device 700 may select (or determine) a parameter and a torque generation algorithm mapped to the exercise selected by the user. Table 1 below shows examples of exercises and parameters/torque generation algorithms respectively mapped to the exercises.

**[Table 1]**

| Exercise | Parameter(s) | Torque generation algorithm (or torque calculation formula) |
|---|---|---|
| Exercise A (e.g., Exercise in which the first half of a leg raise of a kickback is mainly assisted) | *α_{A}* and *µ_{A}* | *τ =* k · (*α - θ + µ · θ̇*) |
| Exercise B (e.g., Exercise in which the second half of a leg raise of a kickback is mainly assisted) | *µ_{B}* | *τ* = *k ·* (*θ + µ* · *θ̇*) |
| Exercise C (e.g., Exercise in which resistance is mainly provided to the first half of a leg raise of a kickback) | *α_{C}* and *µ_{C}* | *τ =* -k · (*α - θ + µ - θ̇*) |
| Exercise D (e.g., Exercise in which resistance is mainly provided to the second half of a leg raise of a kickback) | *µ_{D}* | *τ =* -k · (*θ + µ · θ̇*) |
| Exercise E (e.g., Exercise in which the first half of a stand-up motion of a squat is mainly assisted) | *µ_{E}* | *τ* = -k · (*θ - µ · θ̇*) |
| Exercise F (e.g., Exercise in which the second half of a stand-up motion of a squat is mainly assisted) | *α_{F}* and *µ_{F}* | *τ =* -k · (*α - θ - µ · θ̇*) |
| Exercise G (e.g., Exercise in which resistance is mainly provided to the first half of a stand-up motion of a squat) | *µ_{G}* | *τ* = k · (*θ* - *µ* · *θ̇*) |
| Exercise H (e.g., Exercise in which resistance is mainly provided to the second half of a stand-up motion of a squat) | *α_{H}* and *µ_{H}* | *τ =* k · (*α - θ - µ · θ̇*) |
| Exercise I (e.g., Exercise in which assistance is provided in a kickback, a squat, etc.) | *θ̇_{offset_I}* | *τ* = *k ·* (*θ̇ + θ̇_{offset}*) · *θ* |
| Exercise J (e.g., Exercise for strengthening muscles in a kickback, a squat, etc.) | *θ̇_{offset_J}* | *τ* = *-k* · (*θ̇ + θ̇_{offset}*) · *θ* |

In Table 1 above, *α_{A}, α_{C}, α_{F},* and *α_{H}* may be different from each other. Embodiments are not limited thereto, and *α_{A}, α_{C}, α_{F},* and *α_{H}* may be the same as each other. *µ_{A}, µ_{B}, µ_{C}, µ_{D}, µ_{E}, µ_{F}, µ_{G},* and *µ_{H}* may be different from each other. Embodiments are not limited thereto, and *µ_{A}, µ_{B}, µ_{C}, µ_{D}, µ_{E}, µ_{F}, µ_{G},* and *µ_{H}* may be the same as each other. *θ̇_{offset_I}* and *θ̇_{offset_J}* may be different from each other, but are not limited thereto, and may be the same as each other.

In an embodiment, the wearable device 700 may output a torque based on the selected parameters and the torque generation algorithm.

In an embodiment, the parameters in Table 1 above may differ for each user. For example, *α_{A}* and *µ_{A}* of a user 1 may be different from *α_{A}* and *µ_{A}* of a user 2. Accordingly, a personalized exercise may be performed.

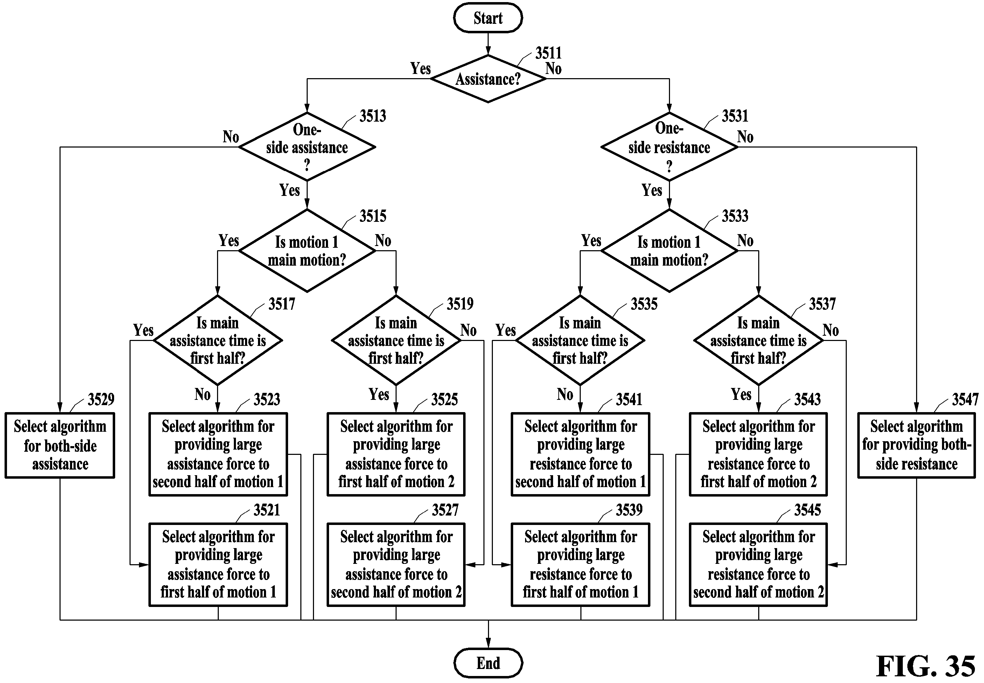

FIG. 35 is a flowchart illustrating an example of selecting a torque generation algorithm by a wearable device according to an example embodiment.

Referring to FIG. 35, the wearable device 700 (or an electronic device) may determine or select a torque generation algorithm (or torque calculation formula) appropriate for a request from a user. For example, the wearable device 700 (or the electronic device) may analyze user input information (or user selection information) (e.g., a voice input, a text input, etc.), identify a request from the user, and determine or select a torque generation algorithm (or torque calculation formula) appropriate for the identified request. The user input information may include, for example, assistance with a leg raise of a kickback and an exercise intensity. As another example, the user input information may include strengthening muscles through a leg raise of a kickback and an exercise intensity.

In operation 3511, the wearable device 700 (or an electronic device) may determine whether an exercise (e.g., an exercise selected by a user) corresponds to an exercise assisted by the wearable device 700 based on user input information. For example, when an indicator or text corresponding to assistance is included in the user input information, the wearable device 700 (or the electronic device) may determine the exercise corresponds to an exercise to which the wearable device 700 provides an assistance force (or an assistance torque). When an indicator or text corresponding to resistance (or strengthening muscles) is included in the user input information, the wearable device 700 (or the electronic device) may determine the exercise corresponds to an exercise to which the wearable device 700 provides a resistance force (or a resistance torque).

When the exercise corresponds to an exercise to which the wearable device 700 provides an assistance force (or an assistance torque), the wearable device 700 (or the electronic device) may determine whether assistance from the wearable device 700 is one-side assistance, in operation 3513. The one-side assistance may indicate that assistance from the wearable device 700 is provided to a main motion among a motion 1 in which the joint angle increases and a motion 2 in which the joint angle decreases. The one-side assistance may correspond to the first mode described above.

When the assistance from the wearable device 700 is one-side assistance, the wearable device 700 (or the electronic device) may determine whether the motion 1 of the exercise is the main motion, in operation 3515. Which of the motion 1 and the motion 2 of the exercise is the main motion may be specified in advance. For example, among a motion 1 and a motion 2 of a squat, the motion 2 may be specified as the main motion in advance, and among a motion 1 and a motion 2 of a kickback, the motion 1 may be specified as the main motion in advance.

When the motion 1 of the exercise is the main motion, the wearable device 700 (or the electronic device) may determine whether the main assistance time is the first half, in operation 3517. For example, when "assistance time = first half" is included in the user input information, the wearable device 700 (or the electronic device) may determine that the main assistance time is the first half. When "assistance time = second half" is included in the user input information, the wearable device 700 (or the electronic device) may determine that the main assistance time is the second half. Depending on the embodiment, an assistance time may not be included in user input information. In this case, by default, the wearable device 700 (or the electronic device) may determine a main assistance time to be a first half.

When the main assistance time is the first half, the wearable device 700 (or the electronic device) may select an algorithm (e.g., *τ* = k · (*α - θ* + *µ* · *θ̇*)) for providing a great assistance force to the first half of a motion 1, in operation 3521. For example, when a request from the user is determined to be a request for providing a relatively great assistance force to the first half of a main motion (e.g., a motion 1) of an exercise than to a second half of the main motion based on the user input information, the wearable device 700 (or the electronic device) may select the algorithm (e.g., *τ* = k · (*α - θ* + *µ · θ̇*)) in operation 3521.

When the main assistance time is the second half, the wearable device 700 (or the electronic device) may select an algorithm (e.g., *τ* = k · (*θ* + *µ* · *θ̇*)) for providing a great assistance force to the second half of the motion 1, in operation 3523. For example, when the request from the user is determined to be a request for providing a relatively great assistance force to the second half of the main motion (e.g., the motion 1) of the exercise than to the first half of the main motion based on the user input information, the wearable device 700 (or the electronic device) may select the algorithm (e.g., *τ* = k · (*θ* + *µ* · *θ̇*)) in operation 3523.

When a motion 2 of the exercise is the main motion, the wearable device 700 (or the electronic device) may determine whether the main assistance time is the first half, in operation 3519.

When the main assistance time of the motion 2 is the first half, the wearable device 700 (or the electronic device) may select an algorithm (e.g., *τ* = -k · (*θ* - *µ* · *θ̇*)) for providing a great assistance force to the first half of the motion 2, in operation 3525. For example, when the request from the user is determined to be a request for providing a relatively great assistance force to the first half of the main motion (e.g., the motion 2) of the exercise than to the second half of the main motion based on the user input information, the wearable device 700 (or the electronic device) may select the algorithm (e.g., *τ* = -k · (*θ* - *µ · θ̇*)) in operation 3525.

When the main assistance time of the motion 2 is the second half, the wearable device 700 (or the electronic device) may select an algorithm (e.g., *τ* = -k · (*α - θ* - *µ · θ̇*)) for providing a great assistance force to the second half of the motion 2, in operation 3527. For example, when the request from the user is determined to be a request for providing a relatively great assistance force to the second half of the main motion (e.g., the motion 2) of the exercise than to the first half of the main motion based on the user input information, the wearable device 700 (or the electronic device) may select the algorithm (e.g., *τ* = -k · (*α - θ* - *µ* · *θ̇*)) in operation 3527.

When the assistance from the wearable device 700 is both-side assistance, the wearable device 700 (or the electronic device) may select an algorithm (e.g., *τ = k ·* (*θ̇ + θ̇_{offset}*) · *θ*) for providing both-side assistance in operation 3529. For example, when the request from the user is determined to be a request for providing assistance with the motions (e.g., the motion 1 and the motion 2) of the exercise based on the user input information, the wearable device 700 (or the electronic device) may select the algorithm (e.g., *τ = k* · (*θ̇ + θ̇_{offset}*) · *θ*).

In an embodiment, the both-side assistance may be assisting with the exercise of the user through torques in different directions in the motion 1 in which the joint angle increases and the motion 2 in which the joint angle decreases. The both-side assistance may correspond to the third mode described above.

Returning to operation 3511, when the exercise (e.g., the exercise selected by the user) corresponds to an exercise in which resistance is provided from the wearable device 700, the wearable device 700 (or the electronic device) may determine whether the resistance from the wearable device 700 is one-side resistance in operation 3531. The one-side resistance may indicate that resistance from the wearable device 700 is provided to the main motion among the motion 1 in which the joint angle increases and the motion 2 in which the joint angle decreases. The one-side resistance may correspond to the second mode described above.

When the resistance from the wearable device 700 is one-side resistance, the wearable device 700 (or the electronic device) may determine whether the motion 1 of the exercise is the main motion, in operation 3533.

When the motion 1 of the exercise is the main motion, the wearable device 700 (or the electronic device) may determine whether the main assistance time is the first half, in operation 3535.

When the main assistance time is the first half, the wearable device 700 (or the electronic device) may select an algorithm (e.g., *τ* = -k · (*α - θ* + *µ · θ̇*)) for providing a great resistance force to the first half of the motion 1, in operation 3539. For example, when the request from the user is determined to be a request for providing a great resistance force to the first half of the main motion (e.g., the motion 1) of the exercise than to the second half of the main motion based on the user input information, the wearable device 700 (or the electronic device) may select the algorithm (e.g., *τ =* -k · (*α - θ + µ · θ̇*)).

When the main assistance time is the second half, the wearable device 700 (or the electronic device) may select an algorithm (e.g., *τ* = -k · (*θ* + *µ* · *θ̇*)) for providing a great resistance force to the second half of the motion 1, in operation 3541. For example, when the request from the user is determined to be a request for providing a great resistance force to the second half of the main motion (e.g., the motion 1) of the exercise than to the first half of the main motion based on the user input information, the wearable device 700 (or the electronic device) may select the algorithm (e.g., *τ* = -k · (*θ + µ · θ̇*)).

When the motion 2 of the exercise is the main motion, the wearable device 700 (or the electronic device) may determine whether the main assistance time is the first half, in operation 3537.

When the main assistance time is the first half, the wearable device 700 (or the electronic device) may select an algorithm (e.g., *τ* = k · (*θ* - *µ · θ̇*)) for providing a great resistance force to the first half of the motion 2, in operation 3543. For example, when the request from the user is determined to be a request for providing a great resistance force to the first half of the main motion (e.g., the motion 2) of the exercise than to the second half of the main motion based on the user input information, the wearable device 700 (or the electronic device) may select the algorithm (e.g., *τ* = k *·* (*θ - µ · θ̇*)).

When the main assistance time is the second half, the wearable device 700 (or the electronic device) may select an algorithm (e.g., *τ* = k *·* (*α - θ* - *µ* · *θ̇*)) for providing a great resistance force to the second half of the motion 2, in operation 3545. For example, when the request from the user is determined to be a request for providing a great resistance force to the second half of the main motion (e.g., the motion 2) of the exercise than to the first half of the main motion based on the user input information, the wearable device 700 (or the electronic device) may select the algorithm (e.g., *τ* = k *·* (*α - θ - µ · θ̇*)).

When the resistance from the wearable device 700 is both-side resistance, the wearable device 700 (or the electronic device) may select an algorithm (e.g., *τ =* -*k ·* (*θ̇ + θ̇_{offset}*) · *θ*) for providing both-side resistance, in operation 3547. For example, when the request from the user is determined to be a request for providing resistance to the motions (e.g., the motion 1 and the motion 2) of the exercise based on the user input information, the wearable device 700 (or the electronic device) may select the algorithm (e.g., *τ = -k ·* (*θ̇ + θ̇_{offset}*) · *θ*).

The both-side resistance may be providing resistance to the exercise of the user through torques in different directions in the motion 1 in which the joint angle increases and the motion 2 in which the joint angle decreases. The both-side resistance may correspond to the fourth mode described above.

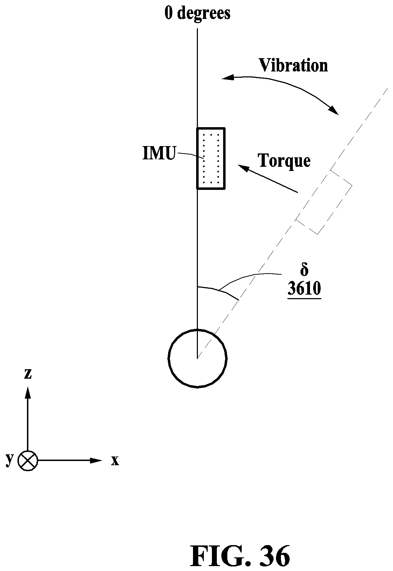

FIG. 36 is a diagram illustrating an example of a stabilization operation of a wearable device according to an example embodiment.

For exercises supported by the wearable device 700, it may be most ideal when the magnitude of a torque is "0" in a reference posture (e.g., a posture with a joint angle of 0 degrees).

When a user wears the wearable device 700 loosely, when the wearable device 700 is twisted, or when the user performs a motion in an opposite direction (e.g., a motion in which the joint angle is negative), the angle δ 3610 may be negative. **In** this case, as in the example shown in FIG. 36, a torque that causes the angle δ 3610 to direct to "0" may be generated.

When the angle δ 3610 is "0", the torque generation may suspended, and in a given situation (e.g., when the user wears the wearable device 700 loosely, when the wearable device 700 is twisted, or when the user performs a motion in an opposite direction (e.g., a motion in which the joint angle is negative), the torque generation may be suspended, causing the angle δ 3610 to be negative again, and a torque that causes the angle δ 3610 to direct to "0" may be generated.

"Torque is generated → Torque generation is suspended as the angle δ 3610 is 0 degrees → Angle δ 3610 is negative → Torque is generated" may be repeated, and such repetition may cause vibration. Such vibration may lower the user experience and stability of the wearable device 700.

In an embodiment, when the angle δ 3610 is negative, the wearable device 700 may prevent or reduce a chance of the generation of a torque or may cause the magnitude of the torque to converge to a first value (e.g., "0") at a high speed. For example, when the angle δ 3610 is negative, the processor 710 of the wearable device 700 may prevent or reduce a chance of the generation of a torque by setting the gain k as "0".

In an embodiment, the wearable device 700 may detect that the user returns to the reference posture through the joint angle of the user during the exercise of the user. At this time, when the joint angle of the user is within a predetermined angle (e.g., 10 degrees), the wearable device 700 may cause the torque to quickly converge to the first value (e.g., "0"). For example, when the joint angle is within the predetermined angle (e.g., 10 degrees), the processor 710 of the wearable device 700 may cause the torque to converge to the first value (e.g., "0") at a high speed by adjusting the torque according to "*τ* · (*Joint Angle*/*10)".*

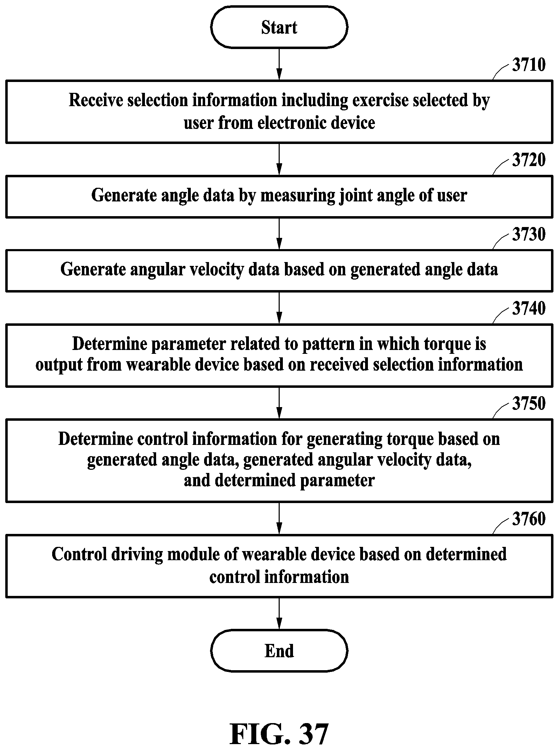

FIG. 37 is a flowchart illustrating an operating method of a wearable device according to an example embodiment.

Referring to FIG. 37, in operation 3710, the wearable device 700 may receive selection information including an exercise selected by a user from an electronic device.

**In** operation 3720, the wearable device 700 may generate angle data by measuring a joint angle of the user.

In operation 3730, the wearable device 700 may generate angular velocity data based on the generated angle data.

In operation 3740, the wearable device 700 may determine a parameter related to a pattern in which a torque is output from the wearable device 700 based on the received selection information.

In operation 3750, the wearable device 700 may determine control information for generating the torque based on the generated angle data, the generated angular velocity data, and the determined parameter.

In operation 3760, the wearable device 700 may control the driving module of the wearable device 700 based on the determined control information.

In an embodiment, the selected exercise may correspond to an exercise in which greater assistance is provided to a first section among the first section (e.g., the first half described above) and a second section (e.g., the second half described above) of a first motion (e.g., the motion 1 described above). Alternatively, there may be a user input (or a user selection) requesting greater assistance with the first section among the first section and the second section of the first motion of the exercise (e.g., a squat, a kickback, etc.) in the first mode of the wearable device 700. In this case, the processor 710 may apply a coefficient (e.g., *µ_{A}*) mapped to the selected exercise to the generated angular velocity data (e.g., *θ̇*)*,* determine a difference between an angle value (e.g., *α_{A}*) mapped to the selected exercise and the generated angle data (e.g., *θ*), determine first control information (e.g., k*_{A}* · (*α_{A} - θ + µ_{A}* · *θ̇*)) based on a result of applying (e.g., *µ_{A}* · *θ̇*)*,* the determined difference (e.g., *α_{A} - θ*), and a gain (e.g., k*_{A}*) of a first sign, and control the driving module 720 based on the determined first control information.

In an embodiment, the selected exercise may correspond to an exercise in which greater assistance is provided to the second section among the first section and the second section of the first motion. Alternatively, there may be a user input (or a user selection) requesting greater assistance with the second section among the first section and the second section of the first motion of the exercise in the first mode of the wearable device 700. In this case, the processor 710 may apply a coefficient (e.g., *µ_{B}*) mapped to the selected exercise to the generated angular velocity data (e.g., *θ̇*)*,* determine second control information (e.g., k*_{B} ·* (*θ + µ_{B}* · *θ̇*)) based on a result of applying (e.g., *µ_{B}* · *θ̇*)*,* the generated angle data (e.g., *θ*), and a gain (e.g., k*_{B}*) of the first sign, and control the driving module 720 based on the determined second control information.

In an embodiment, the selected exercise may correspond to an exercise in which greater assistance is provided to a first section among the first section (e.g., the first half) and a second section (e.g., the second half) of a second motion (e.g., the motion 2 described above). Alternatively, there may be a user input (or a user selection) requesting greater assistance with the first section among the first section and the second section of the second motion of the exercise in the first mode of the wearable device 700. In this case, the processor 710 may apply a coefficient (e.g., *µ_{E}*) mapped to the selected exercise to the generated angular velocity data (e.g., *θ̇*), determine third control information (e.g., -k*_{E} ·* (*θ - µ_{E} · θ̇*)) based on a result of applying (e.g., *µ_{E} · θ̇*), the generated angle data (e.g., *θ*), and a gain (e.g., -k*_{E}*) of a second sign, and control the driving module 720 based on the determined third control information.

In an embodiment, the selected exercise may correspond to an exercise in which greater assistance is provided to the second section among the first section (e.g., the first half) and the second section (e.g., the second half) of the second motion (e.g., the motion 2 described above). Alternatively, there may be a user input (or a user selection) requesting greater assistance with the second section among the first section and the second section of the second motion of the exercise in the first mode of the wearable device 700. In this case, the processor 710 may apply a coefficient (e.g., *µ_{F}*) mapped to the selected exercise to the generated angular velocity data (e.g., *θ̇*)*,* determine a difference between an angle value (e.g., *α_{F}*) mapped to the selected exercise and the generated angle data (e.g., *θ*), determine fourth control information (e.g., -k*_{F} ·* (*α_{F} - θ + µ_{F}* · *θ̇*)) based on a result of applying (e.g., *µ_{F} · θ̇*)*,* the determined difference (e.g., *α_{F} - θ*), and a gain (e.g., -k*_{F}*) of the second sign, and control the driving module 720 based on the determined fourth control information.

In an embodiment, the selected exercise may correspond to an exercise in which greater resistance is provided to the first section among the first section (e.g., the first half) and the second section (e.g., the second half) of the first motion (e.g., the motion 1 described above). Alternatively, there may be a user input (or a user selection) requesting greater resistance to the first section among the first section and the second section of the first motion of the exercise in the second mode of the wearable device 700. In this case, the processor 710 may apply a coefficient (e.g., *µ_{C}*) mapped to the selected exercise to the generated angular velocity data (e.g., *θ̇*), determine a difference between an angle value (e.g., *α_{C}*) mapped to the selected exercise and the generated angle data (e.g., *θ*), determine fifth control information (e.g., = -k*_{C} ·* (*α_{C} - θ + µ_{C}* · *θ̇*)) based on a result of applying (e.g., *µ_{C} · θ̇*)*,* the determined difference (e.g., *α_{C} - θ*), and a gain (e.g., -k*_{C}*) of the second sign, and control the driving module 720 based on the determined fifth control information.

In an embodiment, the selected exercise may correspond to an exercise in which greater resistance is provided to the second section among the first section (e.g., the first half) and the second section (e.g., the second half) of the first motion (e.g., the motion 1 described above). Alternatively, there may be a user input (or a user selection) requesting greater resistance to the second section among the first section and the second section of the first motion of the exercise in the second mode of the wearable device 700. In this case, the processor 710 may apply a coefficient (e.g., *µ_{D}*) mapped to the selected exercise to the generated angular velocity data (e.g., *θ̇*), determine sixth control information (e.g., -k*_{D}* · (*θ + µ_{D} · θ̇*)) based on a result of applying (e.g., *µ_{D} · θ̇*)*,* the generated angle data (e.g., *θ*), and a gain (e.g., -k*_{D}*) of the second sign, and control the driving module 720 based on the determined sixth control information.

In an embodiment, the selected exercise may correspond to an exercise in which greater resistance is provided to the first section among the first section (e.g., the first half) and the second section (e.g., the second half) of the second motion (e.g., the motion 2 described above). Alternatively, there may be a user input (or a user selection) requesting greater resistance to the first section among the first section and the second section of the second motion of the exercise in the second mode of the wearable device 700. In this case, the processor 710 may apply a coefficient (e.g., *µ_{G}*) mapped to the selected exercise to the generated angular velocity data (e.g., *θ̇*), determine seventh control information (e.g., k*_{G}* · (*θ - µ_{G}* · *θ̇*)) based on a result of applying (e.g., *µ_{G}* · *θ̇*)*,* the generated angle data (e.g., *θ*), and a gain (e.g., k*_{G}*) of the first sign, and control the driving module 720 based on the determined seventh control information.

In an embodiment, the selected exercise may correspond to an exercise in which greater resistance is provided to the second section among the first section (e.g., the first half) and the second section (e.g., the second half) of the second motion (e.g., the motion 2 described above). Alternatively, there may be a user input (or a user selection) requesting greater resistance to the second section among the first section and the second section of the second motion of the exercise in the second mode of the wearable device 700. In this case, the processor 710 may apply a coefficient (e.g., *µ_{H}*) mapped to the selected exercise to the generated angular velocity data (e.g., *θ̇*), determine eighth control information (e.g., k*_{H} ·* (*α_{H} - θ - µ_{H}* · *θ̇*)) based on a result of applying (e.g., *µ_{H} · θ̇*) a difference between an angle value (e.g., *α_{H}*) mapped to the selected exercise and the generated angle data (e.g., *θ*), and a gain (e.g., k*_{H}*) of the first sign, and control the driving module 720 based on the determined eighth control information.

In an embodiment, the selected exercise may correspond to an exercise in which assistance is provided to the first motion and the second motion. Alternatively, there may be a user input (or a user selection) requesting assistance with the first motion and the second motion of the exercise in the third mode of the wearable device 700. In this case, the processor 710 may add up the generated angular velocity data (e.g., *θ̇*) and an offset angular velocity (e.g., *θ̇_{offset_I}*), determine ninth control information (e.g., k*_{I} ·* (*θ̇ + θ̇_{offset_I}*) · *θ*) based on a result of adding up, the generated angle data (e.g., *θ*), and a gain (e.g., k*_{I}*) of the first sign, and control the driving module 720 based on the determined ninth control information.

In an embodiment, the selected exercise may correspond to an exercise in which resistance is provided to the first motion and the second motion. Alternatively, there may be a user input (or a user selection) requesting resistance to the first motion and the second motion of the exercise in the fourth mode of the wearable device 700. In this case, the processor 710 may add up the generated angular velocity data (e.g., *θ̇*) and an offset angular velocity (e.g., *θ̇_{offset_J}*), determine tenth control information (e.g., *-*k*_{J} ·* (*θ̇ + θ̇_{offset_J}*) · *θ*) based on a result of adding up, the generated angle data (e.g., *θ*), and a gain (e.g., -k*_{J}*) of the second sign, and control the driving module 720 based on the determined tenth control information. "Based on" as used herein covers based at least on.

In an embodiment, when the joint angle of the user is negative, the processor 710 of the wearable device 700 may control the driving module 720 not to generate a torque or may control the driving module 720 so that the magnitude of the torque from the driving module 720 may quickly converge to a first value.

In an embodiment, the processor 710 of the wearable device 700 may determine whether the joint angle of the user is less than or equal to a predetermined angle (e.g., 10 degrees described through FIG. 36) when the motion of the user is returning to a reference posture. When it is determined the joint angle is less than or equal to the predetermined angle, the processor 710 may control the driving module 720 so that the magnitude of the torque from the driving module 720 may quickly converge to the first value (e.g., "0").

The wearable device 700 according to an embodiment may provide a plurality of torque patterns according to the exercise goal (e.g., assisting with an exercise or strengthening muscles) of the user, a detailed motion (e.g., the motion 1 or the motion 2), and a torque output time (e.g., the first half or the second half).

The embodiments described with reference to FIGS. 1 to 36 may apply to the operating method of the wearable device 700 of FIG. 37.

Each embodiment herein may be used in combination with any other embodiment(s) described herein.

The units described herein may be implemented using a hardware component, a software component and/or a combination thereof. A processing device may be implemented using one or more general-purpose or special-purpose computers, such as, for example, a processor, a controller and an arithmetic logic unit (ALU), a digital signal processor (DSP), a microcomputer, a field-programmable gate array (FPGA), a programmable logic unit (PLU), a microprocessor or any other device capable of responding to and executing instructions in a defined manner. The processing device may run an operating system (OS) and one or more software applications that run on the OS. The processing device also may access, store, manipulate, process, and create data in response to execution of the software. For purpose of simplicity, the description of a processing device is used as singular; however, one skilled in the art will appreciate that a processing device may include multiple processing elements and multiple types of processing elements. For example, the processing device may include a plurality of processors, or a single processor and a single controller. In addition, different processing configurations are possible, such as parallel processors.

The software may include a computer program, a piece of code, an instruction, or some combination thereof, to independently or uniformly instruct or configure the processing device to operate as desired. Software and data may be embodied permanently or temporarily in any type of machine, component, physical or virtual equipment, computer storage medium or device, or in a propagated signal wave capable of providing instructions or data to or being interpreted by the processing device. The software also may be distributed over network-coupled computer systems so that the software is stored and executed in a distributed fashion. The software and data may be stored by one or more non-transitory computer-readable recording mediums.

The methods according to the above-described embodiments may be recorded in non-transitory computer-readable media including program instructions to implement various operations of the above-described embodiments. The media may also include, alone or in combination with the program instructions, data files, data structures, and the like. The program instructions recorded on the media may be those specially designed and constructed for the purposes of embodiments, or they may be of the kind well-known and available to those having skill in the computer software arts. Examples of non-transitory computer-readable media include magnetic media such as hard disks, floppy disks, and magnetic tape; optical media such as CD-ROM discs, DVDs, and/or Blue-ray discs; magneto-optical media such as optical discs; and hardware devices that are specially configured to store and perform program instructions, such as read-only memory (ROM), random access memory (RAM), flash memory (e.g., USB flash drives, memory cards, memory sticks, etc.), and the like. Examples of program instructions include both machine code, such as produced by a compiler, and files containing higher-level code that may be executed by the computer using an interpreter.

The above-described devices may be configured to act as one or more software modules in order to perform the operations of the above-described embodiments, or vice versa.

A number of embodiments have been described above. Nevertheless, it should be understood that various modifications may be made to these embodiments. For example, suitable results may be achieved if the described techniques are performed in a different order and/or if components in a described system, architecture, device, or circuit are combined in a different manner and/or replaced or supplemented by other components or their equivalents. While the disclosure has been illustrated and described with reference to various embodiments, it will be understood that the various embodiments are intended to be illustrative, not limiting. It will further be understood by those skilled in the art that various changes in form and detail may be made without departing from the true spirit and full scope of the disclosure, including the appended claims and their equivalents. It will also be understood that any of the embodiment(s) described herein may be used in conjunction with any other embodiment(s) described herein.

Accordingly, other implementations are within the scope of the following claims.

## Claims

1. A wearable device 100, 700 configured to be worn on a body of a user, the wearable device comprising:
a driving module 720, comprising a motor and/or circuitry, configured to generate and output torque;
a communication module 730, comprising communication circuitry, configured to perform communication with an electronic device;
a sensor 740 configured to provide angle data based on a joint angle of the user; and
at least one processor 710 configured to:
receive selection information comprising an exercise selected by the user from the electronic device via the communication module,
generate angular velocity data based on the angle data,
determine a parameter related to a pattern in which torque is output based on the received selection information,
determine control information for generating torque based on the angle data, the generated angular velocity data, and the determined parameter, and control the driving module to generate torque based on the determined control information.

2. The wearable device of claim 1, wherein the at least one processor is further configured to select a parameter mapped to the selected exercise from among a plurality of parameters.

3. The wearable device of claim 1, wherein
the selection information comprises an exercise intensity set by the user, and
the at least one processor is further configured to determine a gain related to a magnitude of the torque based on the set exercise intensity.

4. The wearable device of claim 1, wherein
the selected exercise comprises a first motion in which the joint angle increases and a second motion in which the joint angle decreases, and
the at least one processor is further configured to control the wearable device to operate in one of a plurality of modes according to the selection information,
wherein the plurality of modes comprise:
a first mode in which the wearable device is to output torques in the same direction in the first motion and the second motion and to output an assistance torque that assists with a designated motion among the first motion and the second motion;
a second mode in which the wearable device is to output torques in the same direction in the first motion and the second motion and to output a resistance torque that provides resistance to a designated motion among the first motion and the second motion;
a third mode in which the wearable device is to output torques in different directions in the first motion and the second motion and to output an assistance torque that assists with the first motion and the second motion; and
a fourth mode in which the wearable device is to output torques in different directions in the first motion and the second motion and to output a resistance torque that provides resistance to the first motion and the second motion.

5. The wearable device of claim 1, wherein when the selected exercise corresponds to an exercise in which greater assistance is provided to a first section among the first section and a second section of a first motion in which the joint angle increases, the at least one processor is further configured to apply a coefficient mapped to the selected exercise to the generated angular velocity data, determine a difference between an angle value mapped to the selected exercise and the generated angle data, determine first control information based on a result of the applying, the determined difference, and a gain of a first sign, and control the driving module based on the determined first control information.

6. The wearable device of claim 1, wherein when the selected exercise corresponds to an exercise in which greater assistance is provided to a second section among a first section and the second section of a first motion in which the joint angle increases, the at least one processor is further configured to apply a coefficient mapped to the selected exercise to the generated angular velocity data, determine second control information based on a result of the applying, the generated angle data, and a gain of a first sign, and control the driving module based on the determined second control information.

7. The wearable device of claim 1, wherein when the selected exercise corresponds to an exercise in which greater assistance is provided to a first section among the first section and a second section of a second motion in which the joint angle decreases, the at least one processor is further configured to apply a coefficient mapped to the selected exercise to the generated angular velocity data, determine third control information based on a result of the applying, the generated angle data, and a gain of a second sign, and control the driving module based on the determined third control information; or
wherein when the selected exercise corresponds to an exercise in which greater assistance is provided to a second section among a first section and the second section of a second motion in which the joint angle decreases, the at least one processor is further configured to apply a coefficient mapped to the selected exercise to the generated angular velocity data, determine a difference between an angle value mapped to the selected exercise and the generated angle data, determine fourth control information based on a result of the applying, the determined difference, and a gain of a second sign, and control the driving module based on the determined fourth control information.

8. The wearable device of claim 1, wherein when the selected exercise corresponds to an exercise in which greater resistance is provided to a first section among the first section and a second section of a first motion in which the joint angle increases, the at least one processor is further configured to apply a coefficient mapped to the selected exercise to the generated angular velocity data, determine a difference between an angle value mapped to the selected exercise and the generated angle data, determine fifth control information based on a result of the applying, the determined difference, and a gain of a second sign, and control the driving module based on the determined fifth control information; or
wherein when the selected exercise corresponds to an exercise in which greater resistance is provided to a second section among a first section and the second section of a first motion in which the joint angle increases, the at least one processor is further configured to apply a coefficient mapped to the selected exercise to the generated angular velocity data, determine sixth control information based on a result of the applying, the generated angle data, and a gain of a second sign, and control the driving module based on the determined sixth control information.

9. The wearable device of claim 1, wherein when the selected exercise corresponds to an exercise in which greater resistance is provided to a first section among the first section and a second section of a second motion in which the joint angle decreases, the at least one processor is further configured to apply a coefficient mapped to the selected exercise to the generated angular velocity data, determine seventh control information based on a result of the applying, the generated angle data, and a gain of a first sign, and control the driving module based on the determined seventh control information; or
wherein when the selected exercise corresponds to an exercise in which greater resistance is provided to a second section among a first section and the second section of a second motion in which the joint angle decreases, the at least one processor is further configured to apply a coefficient mapped to the selected exercise to the generated angular velocity data, determine eighth control information based on a result of the applying, a difference between an angle value mapped to the selected exercise and the generated angle data, and a gain of a first sign, and control the driving module based on the determined eighth control information.

10. The wearable device of claim 1, wherein when the selected exercise corresponds to an exercise with assistance in a first motion in which the joint angle increases and a second motion in which the joint angle decreases, the at least one processor is further configured to add up the generated angular velocity data and an offset angular velocity, determine ninth control information based on a result of the adding up, the generated angle data, and a gain of a first sign, and control the driving module based on the determined ninth control information; or
wherein when the selected exercise corresponds to an exercise with resistance in a first motion in which the joint angle increases and a second motion in which the joint angle decreases, the at least one processor is further configured to add up the generated angular velocity data and an offset angular velocity, determine tenth control information based on a result of the adding up, the generated angle data, and a gain of a second sign, and control the driving module based on the determined tenth control information.

11. The wearable device of claim 1, wherein the at least one processor is further configured to:
control the driving module not to generate the torque when the joint angle is negative; or
determine whether the joint angle is less than or equal to a predetermined angle when a motion of the user is returning to a reference posture, and control the driving module so that a torque magnitude of the driving module quickly converges to a first value when it is determined the joint angle is less than or equal to the predetermined angle.

12. An operating method of a wearable device 100, 700 configured to be worn on a body of a user, the operating method comprising:
receiving selection information comprising an exercise selected by the user;
generating angle data by measuring a joint angle of the user;
generating angular velocity data based on the generated angle data;
determining a parameter related to a pattern in which a torque is output from the wearable device based on the received selection information;
determining control information for generating the torque based on the generated angle data, the generated angular velocity data, and the determined parameter; and
controlling a driving module, comprising a motor and/or circuitry, of the wearable device to generate the torque based on the determined control information.

13. The operating method of claim 12, wherein the determining of the parameter comprises selecting a parameter mapped to the selected exercise.

14. The operating method of claim 12, wherein
the selection information comprises an exercise intensity set by the user, and
the operating method further comprises determining a gain related to a magnitude of the torque based on the set exercise intensity.

15. The operating method of claim 12, wherein
the selected exercise comprises a first motion in which the joint angle increases and a second motion in which the joint angle decreases, and
the operating method further comprises controlling the wearable device to operate in one of a plurality of modes according to the selection information,
wherein the plurality of modes comprise:
a first mode in which the wearable device outputs torques in the same direction in the first motion and the second motion and outputs an assistance torque that assists with a designated motion among the first motion and the second motion;
a second mode in which the wearable device outputs torques in the same direction in the first motion and the second motion and outputs a resistance torque that provides resistance to a designated motion among the first motion and the second motion;
a third mode in which the wearable device outputs torques in different directions in the first motion and the second motion and outputs an assistance torque that assists with the first motion and the second motion; and
a fourth mode in which the wearable device outputs torques in different directions in the first motion and the second motion and outputs a resistance torque that provides resistance to the first motion and the second motion.
